# EUROPÄISCHE PATENTANMELDUNG

(11) **EP 4 345 032 A2**
(43) Veröffentlichungstag der Anmeldung: **03.04.2024**
(21) Anmeldenummer: 23212592.2
(22) Anmeldetag: 05.02.2016
(51) Int. Cl.: B65G 1/04

(54) **PALETTENTRANSPORTVORRICHTUNG**

(30) Priorität: 06.02.2015 DE 102015001410
(62) Teilanmeldung aus: 18203270.6
(71) Anmelder: Gebhardt Fördertechnik GmbH, 74889 Sinsheim (DE)
(72) Erfinder: Gebhardt, Marco, 74889 Sinsheim (DE); Schindler, Christian, 41069 Mönchengladbach (DE); Weber, Michael, 67657 Kaiserslautern (DE)
(74) Vertreter: Gleim Petri Patent- und Rechtsanwaltspartnerschaft mbB

(57) **Zusammenfassung**

Eine Palettentransportvorrichtung (10) zum Transport von Paletten innerhalb einer orthogonal mit einer Längsrichtung (x), einer Querrichtung (z) und einer Höhenrichtung (y) ausgerichteten Regaleinrichtung entlang eines Fahrwegs mit Längstransportwegen in x-Richtung und Quertransportwegen in z-Richtung, gekennzeichnet dadurch, dass gegebenenfalls eine y-Hubeinrichtung (56) für die Bewegung der Palettenaufnahmeeinheit (16) vorhanden ist, eine Steuereinrichtung (82) zur Steuerung des Antriebs des ersten und zweiten Fahrantriebsaggregats (60, 70) und/oder der Hubantriebsaggregate (50) vorhanden ist und Sensoreinheiten vorhanden sind, die die jeweilige Position der Palettentransportvorrichtung innerhalb des Regalsystems (25) erfassen und mit der Steuereinrichtung (82) entsprechend kommunizieren, weitere Sensoreinheiten vorhanden sind, die mit der Steuereinrichtung (82) kommunizieren, und die zur Kollisionserkennung in x- und z-Richtung dienen.

## Beschreibung

### TECHNISCHES GEBIET

Die vorliegende Erfindung betrifft eine Palettentransportvorrichtung zum Transport von Paletten innerhalb einer orthogonal mit einer Längsrichtung, einer Querrichtung und einer Höhenrichtung ausgerichteten Regaleinrichtung entlang eines Fahrwegs mit Längstransportwegen in x-Richtung und Quertransportwegen in z-Richtung, mit einem Chassis mit einer Palettenaufnahmeeinheit, einem x-Fahrwerk für das Verfahren in Längsrichtung mit seitlich links und rechts beabstandet in x-Richtung angeordneten antreibbaren linken x-Radeinheiten und rechten x-Radeinheiten, einem z-Fahrwerk für das Verfahren in Querrichtung mit seitlich links und rechts angeordneten antreibbaren beabstandeten linken z-Radeinheiten und rechten z-Radeinheiten, Fahrantriebsaggregaten für die Radeinheiten, wobei die x- oder z-Radeinheiten je nach x- oder z-Fahrrichtung mit dem Fahrweg in Kontakt bringbar sind.

Derartige Palettentransportvorrichtungen werden auch Palettenshuttle genannt.

### STAND DER TECHNIK

Hochregallager zur Lagerung von Stückgut in komprimierter Art und Weise, wobei das Stückgut auf Paletten gelagert ist, werden in einer Vielzahl von unterschiedlichsten Geometrien verwendet und weisen in der Regel eine Mehrzahl von Regalen auf, die bevorzugt in Reihen aufgestellt sind und in das Stückgut eingelagert beziehungsweise ausgelagert werden kann. Derartige Hochregallager werden oftmals mittels Gabelstaplern bezüglich der Ein- und Auslagerung bedient, wobei sich die Gabelstapler in den Gängen zwischen den durch die Regale gebildeten Reihen bewegen. Derartige Lagersysteme sind bezüglich ihres wirtschaftlichen Einsatzes nicht optimal. Daher wird eine Automatisierung derartiger Hochregallager unter Einsatz von Be- und Entladesystemen angestrebt, die ein Bereitstellen beziehungsweise Abholen von Stückgut an vordefinierten Lagerplätzen innerhalb der Regalvorrichtung zuverlässig ermöglichen.

In der DE 10 2010 005 591 A1 ist ein Hochregallager zur Lagerung von Paletten mit einer Mehrzahl von Hochregalen beschrieben, welche in Regalgassen aufgestellt sind, so dass sich zwischen den Regalgassen Gänge ergeben, wobei in den Hochregalen Lagerkanäle ausgebildet sind, in denen mindestens eine Palette gelagert werden kann, wobei ein sogenanntes Tandemshuttle eingesetzt wird, das einen Gangwagen und einen Kanalwagen umfasst, wobei der Gangwagen für ein Fahren auf einem Gangschienenbereich und der Kanalwagen für ein Fahren auf einem Kanalschienenbereich ausgebildet ist. Der Kanalwagen ist für den Transport einer Paletten in einem Kanalschienenbereich und der Gangwagen für einen Transport des Kanalwagens in einem Gangschienenbereich ausgebildet. Zusätzlich kommt eine Vertikaltransporteinrichtung zum Einsatz, welche einen Transport des Tandemshuttles von einer ersten Ebene auf eine zweite Ebene ermöglicht.

Eine ähnliche Lösung ist in der DE 32 07 860 A1 beschrieben, die eine Fördereinrichtung für eine Lagerhausanlage betrifft mit in Reihen aufgestellten Hochregalen. Zwischen den Reihen kann ein Unterfahrwagen, welcher einen Trägerwagen huckepack trägt, gefahren werden, um Stückgut aus dem jeweiligen Regalen zu holen. Der Unterwagen kann dabei zusammen mit dem Trägerwagen und dem Stückgut in einem Aufzug gefahren werden, um von diesem zwischen den Stockwerken und einer Übergabestation transportiert zu werden.

Als nächstliegender Stand der Technik ist in der DE 1 556 071 A1 ein mechanisiertes Palettenregallager mit einem Regalblock, in dessen mit Palettenaufliegekonsolen und Fahrschienen versehenen Palettenkanälen wahlweise mechanisierte Hubwagen auf die ganze Länge hineinfahrbar sind beschrieben, das etagenweise Querfahrbahnen aufweist, an deren Ende Aufzüge münden in denen die Hubwagen in Höhenrichtung transportierbar sind. Der Hubwagen selbst weist zwei Fahrwerke für die x-Richtung und z-Richtung auf. Für jede Richtung ist ein Fahrantriebsaggregat vorhanden. Des Weiteren ist ein Hubantriebsaggregat vorhanden zum Anheben und Absenken der Fahrwerke für einen Richtungswechsel. Der Richtungswechsel wird dabei so vollzogen, dass der Hubwagen eine Hub-Senkbewegung der Fahrwerke durchführt, wobei bei diesem Vorgang die Palettenaufnahmeeinheit mit angehoben beziehungsweise abgesenkt werden muss. Dies erfordert einen relativ hohen Energieaufwand, da zum Richtungswechsel die Palettenaufnahmeeinheit und damit auch die auf der Palettenaufnahmeeinheit gelagerte Palette mit Ihrem Gewicht angehoben beziehungsweise abgesenkt werden muss. Durch den zusätzlichen Hub verändert sich auch das Anfahrmaß.

Die WO 2005/077789 A1 offenbart ein automatisiertes Warenhausregallager mit Palettentransportvorrichtungen, die innerhalb des Warenlagers in x- und y-Richtung verfahrbar angeordnet sind. Dabei ist ein Rädersatz für jede Richtung (x, z) vorhanden. Der Antrieb der verschiedenen Radsätze wird dabei über zwei Kupplungen gesteuert. Das Shuttle besitzt 3 Konfigurationen, nämlich das Fahren in Gassenrichtung, das Fahren in Palettenrichtung und das Heben in Palettenrichtung. Querfahrten in z-Richtung sind nur auf speziellen Gängen möglich. Es ist kein komplettes variables Verfahren auf der Ebene in x- und z-Richtung möglich. Es erfolgt keine Steuerung des Geradeauslaufens, vielmehr werden seitliche Führungsrollen und Schienen eingesetzt, die das Shuttle in ihrer Bahn halten sollen. Die Antriebs- und Bewegungsmittel für die Fahrt in Längs- und Querrichtung x, z kann dabei getrennt angesteuert werden.

Die US 3,978,995 A offenbart eine Lagereinrichtung mit einem Palettenshuttle, das nur eine Fahrt in x-Richtung ermöglicht, bei dem ein Mechanismus die Paletten aus dem Regal hebt, ein Richtungswechsel nicht möglich ist und lediglich eine einfach tiefe Lagerung innerhalb des Regalsystems möglich ist.

Die EP 2 308 778 A2 und EP 2 308 777 B1 offenbaren ein automatisches Lagershuttle der eingangs genannten Art mit einer oberen Trägerfläche, die eine Ladeeinheit tragen kann, einer Hebeeinrichtung um die obere Trägerfläche anzuheben/zu senken, vier Radanordnungen, die jeweils im Eckbereich des Shuttles angeordnet sind und einzeln antreibbar sind, jeweils über ein Antriebsaggregat. Die Räder sind um 90 ° drehbar vorhanden, so dass ein Richtungswechsel möglich ist. Alle vier Räder werden jeweils einzeln angetrieben über ein entsprechendes Antriebsaggregat. Vorhandene Sensoren an den Antriebsrädern erfassen den jeweiligen Wandabstand zu den umgebenen Bauteilen. Über eine Steuereinrichtung wird die Drehgeschwindigkeit oder das Drehmoment der angetriebenen Räder in Abhängigkeit von empfangenen Signalen geregelt. Die Bewegung des Shuttles ist durch Rotation der Radanordnungen um 90 ° in zwei senkrechte Richtungen möglich.

In der JP 08157016 A ist ein Palettenshuttle offenbart, bei dem im Eckbereich jeweils Radeinheiten angeordnet sind, die ein eigenes Antriebsaggregat aufweisen und bedarfsweise in ihrer Antriebsrichtung in x- beziehungsweise z-Richtung drehbar sind. Über einen speziellen Mechanismus kann die Palettenaufnahmeeinheit angehoben beziehungsweise abgesenkt werden.

### DARSTELLUNG DER ERFINDUNG

Der vorliegenden Erfindung liegt die Aufgabe beziehungsweise das technische Problem zugrunde eine Palettentransportvorrichtung der eingangs genannten Art anzugeben, die energieeffizient betreibbar ist, wirtschaftlich herstellbar ist, mit geringem konstruktiven Aufwand einen Richtungswechsel der Fahrrichtung von x- in z-Richtung ermöglicht, eine dauerhaft zuverlässige Funktion gewährleistet und ein positionsgenaues Verfahren der Palettentransportvorrichtung innerhalb eines Regalsystems in x- und z-Richtung gewährleistet, einen kompakten Aufbau aufweist und insgesamt eine automatische und effiziente Lagerung von Stückgut innerhalb einer Regaleinrichtung ermöglicht.

Die erfindungsgemäße Palettentransportvorrichtung beziehungsweise das erfindungsgemäße Palettenshuttle der eingangs genannten Art ist durch die Merkmale des unabhängigen Anspruchs 1 gegeben. Vorteilhafte Ausgestaltungen und Weiterbildungen sind Gegenstand der von dem unabhängigen Anspruch 1 direkt oder indirekt abhängigen Ansprüche.

Des Weiteren ist eine erfindungsgemäße Palettentransportvorrichtung der eingangs genannten Art bezüglich des Fahrantriebs durch die Merkmale des alternativ unabhängig formulierten Anspruchs 10 gegeben. Vorteilhafte Ausgestaltungen und Weiterbildungen dieser Palettentransportvorrichtung sind Gegenstand der von dem Anspruch 10 direkt oder indirekt abhängigen Ansprüche.

Die erfindungsgemäße Palettentransportvorrichtung gemäß Anspruch 1 zeichnet sich demgemäß dadurch aus, dass das x-Fahrwerk/die x-Radeinheiten und das z-Fahrwerk/die z-Radeinheiten mechanisch unabhängig voneinander höhenbewegbar in y-Richtung ausgebildet sind, eine x-Hubeinrichtung für die Bewegung des x-Fahrwerks beziehungsweise der x-Radeinheiten in y-Richtung vorhanden ist, eine z-Hubeinrichtung für die Bewegung des z-Fahrwerks beziehungsweise der z-Radeinheiten in y-Richtung vorhanden ist, gegebenenfalls eine y-Hubeinrichtung für die Bewegung der Palettenaufnahmeeinheit vorhanden ist, die x-/z-Hubeinrichtungen unabhängig voneinander und unabhängig von der y-Hubeinrichtung der Palettenaufnahmeeinheit in y-Richtung aktivierbar ausgebildet sind.

Eine besonders bevorzugte Ausgestaltung zeichnet sich dadurch aus, dass ein einzigens Hubantriebsaggregat vorhanden ist, das die Hubbewegung der x- oder z- und/oder der y-Hubeinrichtung aktiviert oder ein x-Hubantriebsaggregat und ein z-Hubantriebsaggregat für die x-/z-Hubeinrichtung vorhanden ist.

Eine vorteilhafte Weiterbildung zeichnet sich dadurch aus, dass die Hubeinrichtungen so ausgebildet sind, dass ein Richtungswechsel der Fahrrichtung von der x- in die z-Richtung und umgekehrt durch entsprechendes Absenken und Anheben der jeweiligen x-/z-Fahrwerke beziehungsweise der jeweiligen x-/z-Radeinheiten erfolgt, ohne dass eine gleichzeitige Verschiebung der Palettenaufnahmeeinheit über die y-Hubeinrichtung in Höhenrichtung erfolgt.

Eine konstruktiv besonders einfach umzusetzende und steuerbare Palettentransportvorrichtung zeichnet sich dadurch aus, dass die Hubeinrichtungen, die Fahrwerke und die Radeinheiten so ausgebildet sind, dass bei einem Richtungswechsel von x- in z-Richtung im Stillstand der Vorrichtung die z-Hubeinrichtung das z-Fahrwerk beziehungsweise die z-Radeinheiten auf das Niveau des x-Fahrwerks beziehungsweise der x-Radeinheiten absenkt und anschließend die x-Hubeinrichtung das x-Fahrwerk beziehungsweise die x-Radeinheiten anhebt, ohne dass dabei das Höhenniveau der Palettenaufnahmeeinheit sich verändert und bei einem Richtungswechsel von z- in x-Richtung entsprechend umgekehrt verfahren wird.

Eine vorteilhafte Ausgestaltung, die eine Hubbewegung der Palettenaufnahmeeinheit unabhängig von den Hubbewegungen der Fahrwerke beziehungsweise Radeinheiten ermöglicht, zeichnet sich dadurch aus, dass eine y-Hubeinrichtung für die Bewegung der Palettenaufnahmeeinheit in y-Richtung vorhanden ist, die y-Hubeinrichtung unabhängig von der x- und z-Hubeinrichtung ansteuerbar ausgebildet ist.

Eine besonders vorteilhafte Weiterbildung, die konstruktiv einfach umzusetzen ist, eine dauerhaft zuverlässige Funktion gewährleistet und eine kompakte Bauform ermöglicht, zeichnet sich dadurch aus, dass jede Hubeinrichtung zumindest eine drehbare Kurvenscheibe oder zumindest eine verschiebbare Kulissenscheibe aufweist, an die das jeweilige Fahrwerk beziehungsweise die jeweiligen Radeinheiten und/oder die Palettenaufnahmeeinheit gekoppelt sind, wobei die Geometrie der Kurvenscheiben oder Kulissenscheiben die Größe und den zeitlichen Verlauf der mechanisch unabhängigen Bewegung des jeweiligen Fahrwerks/der Radeinheiten oder Palettenaufnahmeeinheit in y-Richtung bestimmt.

Eine besonders vorteilhafte Ausgestaltung im Rahmen eines kompakten Aufbaus zeichnet sich dadurch aus, dass alle Kurvenscheiben/Kulissenscheiben für die Fahrwerke/Radeinheiten oder die Palettenaufnahmeeinheit auf einer drehbaren Welle oder an einem Schiebemechanismus angeordnet sind und die Bewegungsabläufe zum Richtungswechsel/Hub der Palettenaufnahmeeinheit bezüglich der zeitlich aufeinander abgestimmten Hubwege in y-Richtung in der Geometrie und der Positionsanordnung der Kurvenscheiben/Kulissenscheiben gespeichert sind, wobei die Aktivierung der Welle beziehungsweise des Verschiebemechanismus über zumindest ein Hubantriebsaggregat erfolgt.

Eine vorteilhafte Weiterbildung, die neben einer konstruktiv einfach umzusetzenden Ausführungsform auch eine dauerhaft zuverlässige Funktion gewährleistet, zeichnet sich dadurch aus, dass die x-Hubeinrichtung/z-Hubeinrichtung über eine, insbesondere auf jeder Seite drehbar vorhandene antreibbare, Spindeleinrichtung bewegbar ist, die auf das x-Fahrwerk/z-Fahrwerk beziehungsweise die x-Radeinheiten/z-Radeinheiten direkt oder indirekt einwirkt und die Spindeleinrichtung über ein gemeinsames Hubantriebsaggregat oder über ein x-Hubantriebsaggregat für das x-Fahrwerk/die x-Radeinheiten und über ein z-Hubantriebsaggregat für das z-Fahrwerk/die z-Radeinheiten ansteuerbar antreibbar ist.

Bevorzugt wird die Drehbewegung des Antriebsaggregats/der Antriebsaggregate auf die Spindeleinrichtung oder auf einzelne Spindel über Kopplungseinrichtungen konstruktiv umgesetzt, wobei der Kopplungsmechanismus der Kopplungseinrichtungen beispielsweise als einfacher Hebelmechanismus, als Doppelhebelmechanismus, als Scherenmechanismus, als Doppelscherenmechanismus oder besonders bevorzugt als Kniehebelmechanismus ausgebildet sein kann.

Eine besonders vorteilhafte erfindungsgemäße Weiterentwicklung, die auch unabhängig von der oben beschriebenen erfindungsgemäßen Ausgestaltung einer Palettentransportvorrichtung angewandt werden kann oder in Kombination mit derselben, zeichnet sich dadurch aus, dass ein erstes Fahrantriebsaggregat und ein zweites Fahrantriebsaggregat vorhanden ist, wobei jedes Fahrantriebsaggregat jeweils mit linken x-Radeinheiten beziehungsweise linken z-Radeinheiten und rechten x-Radeinheiten beziehungsweise rechten z-Radeinheiten einer Seite jeweils antriebsmäßig direkt oder indirekt gekoppelt ist.

Eine konstruktiv besonders einfach umzusetzende vorteilhafte Ausgestaltung, die eine dauerhaft zuverlässige Funktion bei gleichzeitig kompaktem Aufbau gewährleistet, zeichnet sich dadurch aus, dass die Kopplungseinrichtung zwischen erstem und/oder zweitem Fahrantriebsaggregat zu den Radeinheiten zumindest ein Winkelgetriebe, eine Gelenkwelle und/oder zumindest einen Zahnriemen und/oder zumindest eine Kette und/oder zumindest eine Welleneinheit und/oder zumindest einen Omega-Antrieb und/oder zumindest eine Schubgelenkwelleneinheit aufweist.

In besonders vorteilhafter Art und Weise ist die Kopplungseinrichtung dabei so ausgebildet, dass sie den Antrieb der x-Radeinheiten beziehungsweise z-Radeinheiten im unterschiedlichen Höhenniveau in y-Richtung umsetzt.

Dabei zeichnet sich eine besonders vorteilhafte Ausgestaltung dadurch aus, dass das erste und zweite Fahrantriebsaggregat jeweils die/das zugeordnete/n x-Radeinheiten oder x-Fahrwerk direkt und die/das zugeordnete/n z-Radeinheiten oder z-Fahrwerk indirekt über die Kopplungseinrichtung jeweils antreibt oder umgekehrt.

Gemäß einer vorteilhaften alternativen Ausgestaltung kann die Palettentransportvorrichtung auch der Gestalt ausgebildet sein, dass das erste und zweite Fahrantriebsaggregat jeweils an das höhenverschiebbare x- oder z-Fahrwerk angeschlossen ist, das heißt in y-Richtung mit dem Fahrwerk bewegungsmäßig gekoppelt ist.

In einer weiteren vorteilhaften Ausgestaltung ist eine Ausbildungsvariante der erfindungsgemäßen Palettentransportvorrichtung dadurch gekennzeichnet, dass das erste und zweite Fahrantriebsaggregat ortsfest innerhalb der Vorrichtung vorhanden ist.

Eine besonders vorteilhafte Weiterbildung, die eine dauerhaft zuverlässige Funktion bezüglich der Spurführung in x- oder z-Richtung gewährleistet, zeichnet sich dadurch aus, dass auf einer Antriebsseite in x-Richtung und/oder auf einer Antriebsseite in z-Richtung eine mechanische Führungsprofilvorrichtung angeordnet ist, die mit dem x-Fahrwerk und/oder dem z-Fahrwerk gekoppelt ist, eine erste Führungsrolleneinrichtung mit zumindest einer ersten Führungsrolleneinheit vorhanden ist, zwei zweite Führungsrolleneinrichtungen mit zumindest einer zweiten Führungsrolleneinheit in x-beziehungsweise z-Richtung vor beziehungsweise hinter der ersten Führungsrolleneinrichtung angeordnet sind, wobei die Führungsrolleneinheiten um eine y-Drehachse frei drehbar ausgebildet sind, wobei die erste und zweite Führungsrolleneinrichtung so ausgebildet sind, dass sie zwischen gegenüberliegenden in y-Richtung auskragenden Flanschen eines x-/z-Fahrwegprofils eines Fahrweges anordenbar sind und die ersten Führungsrolleneinheiten mit der Innenseite des ersten Flanschen und die zweiten Führungsrolleneinheiten mit der Innenseite des zweiten Flansches in Anlagekontakt bringbar sind, ergänzend dadurch, dass die erste und die zweiten Führungsrolleneinheiten als Führungsrollenpaare ausgebildet sind.

Um eine optimale Spursteuerung und/oder Positionssteuerung zu gewährleisten, zeichnet sich eine besonders vorteilhafte Ausgestaltung der erfindungsgemäßen Palettentransportvorrichtung dadurch aus, dass eine Steuereinrichtung zur Steuerung des Antriebs des ersten und zweiten Fahrantriebsaggregats und/oder der Hubantriebsaggregate vorhanden ist und Sensoreinheiten vorhanden sind, die die jeweilige Position der Palettentransportvorrichtung innerhalb des Regalsystems erfassen und mit der Steuereinrichtung entsprechend kommunizieren.

Eine vorteilhafte Weiterbildung zeichnet sich dadurch aus, dass zumindest eine erste Sensoreinheit vorhanden ist, die auf dem Fahrweg vorhandene Fahrwegsmarkierungen/Positionsmarkierungen detektiert und entsprechende Signale an die Steuereinrichtung zur Spursteuerung und/oder zum Richtungswechsel und/oder zum Hub der Palettenaufnahmeeinheit abgibt.

Dadurch, dass in jeder Fahrrichtung (x und z) die linken und rechten Radeinheiten jeweils über zwei unabhängige Fahrantriebsaggregate angetrieben werden, kann die Palettentransportvorrichtung "wie ein Panzer" gelenkt werden und dadurch eine Fahrrichtungsabweichung jederzeit korrigiert werden.

Besonders vorteilhaft ist in diesem Zusammenhang, die Palettentransportvorrichtung derart auszugestalten, dass zwei erste Sensoreinheiten vorhanden sind, die diagonal gegenüberliegend im Eckbereich oder einer Seite der Vorrichtung angeordnet sind.

Eine besonders vorteilhafte Ausgestaltung, die eine optimale Sensorsteuerung für den Geradeauslauf und den Fahrrichtungswechsel umsetzt, zeichnet sich dadurch, dass zwei in z-Richtung beabstandete z-Sensoreinheiten unterseitig an der Palettentransportvorrichtung vorhanden sind, zwei in x-Richtung beabstandete x-Sensoreinheiten unterseitig an der Palettentransportvorrichtung vorhanden sind, eine Steuereinrichtung für das Hubaggregat und für das erste und zweite Fahrantriebsaggregat vorhanden ist, wobei die z- und x-Sensoreinheiten den Abstand zu der Innenseite von den Fahrweg bildenden unterseitigen z- beziehungsweise x-Fahrzeugprofilen messen und entsprechende Signale an die Steuereinrichtung abgeben, wobei bei einer Fahrt in x-beziehungsweise z-Richtung die Steuereinrichtung aufgrund der Signale der x-Sensoreinheiten beziehungsweise der z-Sensoreinheiten eine eventuelle Winkelabweichung vom Geradeauslauf berechnet und das erste/zweite Fahrantriebsaggregat zur Korrektur der Winkelabweichung entsprechend ansteuert, wobei bei einem Fahrrichtungswechsel von x- in z-Richtung oder von z- in x-Richtung die Steuereinrichtung aufgrund der Signale der x- beziehungsweise z-Sensoreinheiten bei Erreichen eines vorgegebenen Abstandes zu dem x- beziehungsweise y-Fahrprofil, das heißt bei Erreichen der Wechselposition, das Hubantriebsaggregat beziehungsweise die Hubantriebsaggregate zum Durchführen des Fahrrichtungswechsels entsprechend ansteuert.

Um eine optimale dauerhaft zuverlässige Funktion innerhalb des Ein- und Auslagerbetriebs in einer Regalvorrichtung zu gewährleisten und um die Störanfälligkeit zu reduzieren, zeichnet sich eine besonders vorteilhafte Weiterbildung der erfindungsgemäßen Palettentransportvorrichtung dadurch aus, dass weitere Sensoreinheiten vorhanden sind, die mit der Steuereinrichtung kommunizieren, und die zur Kollisionserkennung in x- und z-Richtung und/oder zur Erkennung der Lagerplatzbelegung und/oder zur Erkennung des Höhenniveaus der Palettenaufnahmeeinheit und/oder zur Detektierung des Belegungszustands der Palettenaufnahmeeinheit dienen.

Es können Sensoreinheiten eingesetzt werden, die auf einen optischen, induktiven, magnetischen oder mechanischen Wirkungsprinzip basieren.

Die wesentlichen Vorteile und erfindungswesentlichen Merkmale lassen sich beispielhaft wie nachfolgend aufgeführt darstellen:
Mit der erfindungsgemäßen Palettentransportvorrichtung ist ein Richtungswechsel x-z-Richtung und umgekehrt ohne heben und senken der Last (Palettenaufnahmeeinheit) gegeben, was sich günstig auf den Energieverbrauch auswirkt, da die Hubantriebsaggregate beim Richtungswechsel keine Energie verbrauchen zum Heben und Senken der Palettenlast. Weiterhin sind alle Radeinheiten der Palettentransportvorrichtung angetrieben, was sich positiv auf eine zuverlässige Bewegung und Positionierung der Palettentransportvorrichtung auswirkt. Durch den getrennt ansteuerbaren Antrieb für die linke beziehungsweise rechte Radseite (Fahrwerk, Radeinheit) ergeben sich vorteilhafte Führungseigenschaften der erfindungsgemäßen Palettentransportvorrichtung entlang des vorgegebenen Fahrweges.

Die drei unabhängigen Hubeinrichtungen für die x-, z- und y-Richtung für die x- und z-Fahrwerke beziehungsweise x- und z-Radeinheiten und die Palettenaufnahmeeinheit sind klar definierte Konstruktionselemente für den Fahrrichtungswechsel und den Hub der Palettenaufnahmeeinheit gegeben. Diese unabhängigen Hubeinrichtungen können in besonderer Art und Weise bezüglich ihres jeweiligen Verschiebeweges über Kurvenscheiben beziehungsweise Kulissen angesteuert werden, wobei für die genannten Elemente das Ablaufprogramm beim Fahrrichtungswechsel beziehungsweise der Bewegung der Palettenaufnahmeeinheit in der Kurvenscheiben-/Kulissengeometrie und der Anordnung der Kurvenscheiben/Kulissen zueinander gespeichert ist und mechanisch in dauerhaft zuverlässiger Art und Weise abgerufen werden kann. Dabei erfolgt die Steuerung des Ablaufprogramms bevorzugt über einen oder gegebenenfalls zwei Antriebsmotoren.

Gleichzeitig ist auch eine Hubbewegung der Palettenaufnahmeeinheit bei Fahrt in z-Richtung möglich, was beispielsweise im Rahmen einer Anwendung innerhalb der Vorzone der Regaleinrichtung, das heißt in dem Bereich, in dem keine Fahrwege in x- und z-Richtung vorgegeben sind, möglich ist.

Grundsätzlich können die Palettentransportvorrichtungen auch zum Fahren in der Vorzone der Regaleinrichtung eingesetzt werden, wobei aktive Richtungswechsel in der Vorzone durch Wechsel der Fahrwerke oder Radsätze oder durch unterschiedliche Geschwindigkeiten der Radeinheiten (Prinzip Kettenfahrzeug) problemlos umgesetzt werden können. Dadurch erweitern sich die Einsatzmöglichkeiten der Palettentransportvorrichtung auch außerhalb der eigentlichen Regalvorrichtung nämlich in der Vorzone, in dem in diesem Bereich die unterschiedlichsten Fahrwege problemlos umgesetzt werden können.

Mit der erfindungsgemäßen Palettentransportvorrichtung können in besonders vorteilhafter Art und Weise auf Grundlage einer kompakten Gesamtkonstruktion unter Gewährleistung einer dauerhaft zuverlässigen Funktion ein Richtungswechsel ohne Hub der Palettenaufnahmeeinheit, eine Fahrt in zwei Richtungen (x- und z-Richtung) und auch eine Steuerung des Geradeauslaufens problemlos umgesetzt werden. Einfach und dauerhaft zuverlässig funktionierende mechanische Konstruktionen können für die Kopplung bei der Hubantriebsaggregate an die Hubeinrichtungen und der Fahrantriebsaggregate an die Fahrwerke beziehungsweise die Radeinheiten problemlos umgesetzt werden.

In einer bevorzugten Ausführungsform werden für die erfindungsgemäßen Palettentransportvorrichtung zwei Fahrantriebsaggregate und ein Hubantriebsaggregat benötigt, das heißt insgesamt lediglich drei Antriebsaggregate. Insgesamt zeichnet sich die erfindungsgemäße Palettentransportvorrichtung dadurch aus, dass sie gegenüber den bekannten Vorrichtungen weniger Energie verbraucht und die Bauteile einem geringen Verschleiß unterworfen sind. Weiterhin baut die erfindungsgemäße Palettentransportvorrichtung wesentlich niedriger als vergleichbare bekannte Lösungen mit Fahrt in x- und z-Richtung.

Des Weiteren ermöglicht die erfindungsgemäße Palettentransportvorrichtung neben einem Verfahren in orthogonaler x- beziehungsweise z-Richtung auch eine Kurvenfahrt, die beispielsweise in der Vorzone der Regaleinrichtung - ohne die Vorgabe orthogonaler Fahrwege - vorteilhaft eingesetzt werden kann. Bei einer Kurvenfahrt wird dabei ein so genannter Panzerantrieb umgesetzt, da jeweils gegenüberliegende Radseiten durch die zwei unabhängigen Fahrantriebsaggregate unterschiedlich angesteuert werden können.

Weitere Ausführungsformen und Vorteile der Erfindung ergeben sich durch die in den Ansprüchen ferner aufgeführten Merkmale sowie durch die nachstehend angegebenen Ausführungsbeispiele. Die Merkmale der Ansprüche können in beliebiger Weise miteinander kombiniert werden, insoweit sie sich nicht offensichtlich gegenseitig ausschließen.

### KURZE BESCHREIBUNG DER ZEICHNUNG

Die Erfindung sowie vorteilhafte Ausführungsformen und Weiterbildungen derselben werden im Folgenden anhand der in der Zeichnung dargestellten Beispiele näher beschrieben und erläutert. Die der Beschreibung und der Zeichnung zu entnehmenden Merkmale können einzeln für sich oder zu mehreren in beliebiger Kombination erfindungsgemäß angewandt werden. Es zeigen:
- Fig. 1: stark schematisierte (durchsichtige) Draufsichtsdarstellung auf ein erstes Ausführungsbeispiel einer Palettentransportvorrichtung zum Verfahren von Paletten in die x-beziehungsweise z-Richtung mit einem linken und rechten x-Fahrwerk, einem linken und rechten z-Fahrwerk und jeweils zwei zugehörigen linken und rechten Radeinheiten, wobei die Fahrwerke beziehungsweise Radeinheiten über Hubeinrichtungen in Höhenrichtung (z) wahlweise anhebbar und absenkbar sind, und die Hubeinrichtungen über ein Hubantriebsaggregat antreibbar sind,
- Fig. 2: stark schematisierte (durchsichtige) Seitenansicht der Palettentransportvorrichtung gemäß Fig. 1 mit einer in Höhenrichtung (z) verschiebbaren Paletteneinheit, die an eine Hubeinrichtung gekoppelt ist, die von dem Hubantriebsaggregat antreibbar ist,
- Fig. 3: stark schematisierte (durchsichtige) Draufsichtsdarstellung eines zweiten Ausführungsbeispiels einer Palettentransportvorrichtung, wobei die x-Hubeinrichtung und die z-Hubeinrichtung jeweils über ein Hubantriebsaggregat ansteuerbar ist,
- Fig. 4: stark schematisierte Seitenansicht der Palettentransportvorrichtung gemäß Fig. 2 im Bereich einer x- und z-Radeinheit, mit Darstellungen der Höhenniveaus, die die Radeinheiten je nach Fahrrichtung einnehmen,
- Fig. 5a, b, c: schematische Seitenansicht der Palettentransportvorrichtung gemäß Fig. 1 und 2 bei unterschiedlicher Höhenpositionierung (y-Richtung) der x- beziehungsweise z-Radeinheiten bei abgesenkter Palettenaufnahmeeinheit,
- Fig. 6a, b: Darstellung der Palettentransportvorrichtung gemäß den Figuren 5a bis c bei angehobener Paletteneinheit,
- Fig. 7a, b, c: stark schematisierte Detaildarstellung der jeweiligen Hubposition einer x-Radeinheit, einer z-Radeinheit und der Palettenaufnahmeeinheit, gesteuert über die Drehung von drei auf einer gemeinsamen Welle angeordneten Kurvenscheiben,
- Fig. 8a, b: stark schematisierte Darstellung eines Hubmechanismus für die Radeinheiten und die Palettenaufnahmeeinheit, ausgebildet als verschiebbare Kulisseneinrichtung in einer Seitenansicht (Fig. 8a) und einer Draufsicht (Fig. 8b),
- Fig. 9: stark schematisierte Draufsicht auf ein Regalsystem mit Vorzone und den Transportwegen für die Palettentransportvorrichtung innerhalb des Regalsystems,
- Fig. 10: stark schematisierte Detailperspektivdarstellung einer Struktur eines Regalsystems mit orthogonalen Fahrwegen, die von einer Palettentransportvorrichtung befahrbar sind,
- Fig. 11: Seitenansicht einer Ausführungskonstruktion einer Palettentransportvorrichtung mit aufgenommener Paletteneinheit,
- Fig. 12: schematische (durchsichtige) Draufsicht auf ein konstruktives Ausführungsbeispiel der Palettentransportvorrichtung gemäß den Figuren 1 und 2,
- Fig. 13: stark schematisierte Draufsichtsdarstellung auf ein Ausführungsbeispiel einer Palettentransportvorrichtung mit höhenverschiebbaren x-/z-Fahrwerken beziehungsweise x-/z-Radeinheiten, mit zwei Fahrantriebsaggregaten zum Antrieb aller Radeinheiten, wobei jedes Fahrantriebsaggregat über entsprechende Kopplungseinrichtungen eine Seite mit x-/z-Radeinheiten antreibt,
- Fig. 14 bis 19: weitere konstruktive Ausgestaltungen der Palettentransportvorrichtung gemäß Fig. 13 jeweils mit zwei Fahrantriebsaggregaten bei unterschiedlicher konstruktiver Ausbildung der Kopplungseinrichtungen,
- Fig. 20 bis 32: stark schematisierte (durchsichtige) Draufsichtsdarstellung auf die Palettentransportvorrichtung gemäß Fig. 3 mit jeweils unterschiedlicher konstruktiver Ausgestaltung der Kopplungseinrichtungen der beiden Hubantriebsaggregate mit der x-/z-Hubeinrichtung für das x-/z-Fahrwerk beziehungsweise die x-/z-Radeinheiten,
- Fig. 33: stark schematisierte Draufsichtsdarstellung auf eine Palettentransportvorrichtung gemäß der Darstellung in den vorherigen Figuren mit zusätzlicher Darstellung von Sensoreinheiten zur Steuerung der Bewegung der Palettentransportvorrichtung in x- beziehungsweise z-Richtung mit Hilfe von Fahrwegmarkierungen,
- Fig. 34: stark schematisierte Ansichtsdarstellung der als Kurvenscheiben ausgebildeten Hubeinrichtungen gemäß Fig. 7a bis c in seitlich auseinander gezogener Darstellung,
- Fig. 35: stark schematisierte Draufsichtsdarstellung auf die Palettentransportvorrichtung gemäß Fig. 33 mit nur einer Sensoreinheit,
- Fig. 36a, b: stark schematisierte Detailuntersicht auf eine Palettentransportvorrichtung, die auf einer Antriebsseite eine mechanische Führungsrolleneinrichtung aufweist (Fig. 36a) und schematischer Schnitt durch die Palettentransportvorrichtung gemäß Fig. 36a entlang Schnittführung A-A (Fig. 36b) und
- Fig. 37a, b: stark schematisierte Draufsichtsdarstellung auf eine Palettentransportvorrichtung, die auf einer Antriebsseite in x- und auf einer Antriebsseite in z-Richtung zwei Sensoreinheiten aufweist, die jeweils die Innenkontur eines x-/z-Fahrwegprofils abstandsmäßig detektieren und mit einer Steuereinrichtung für die Fahrantriebsaggregate kommunizieren (Fig. 37a) und schematischer Detailquerschnitt entlang Schnittführung B-B gemäß Fig. 37a (Fig. 37b).

### WEGE ZUM AUSFÜHREN DER ERFINDUNG

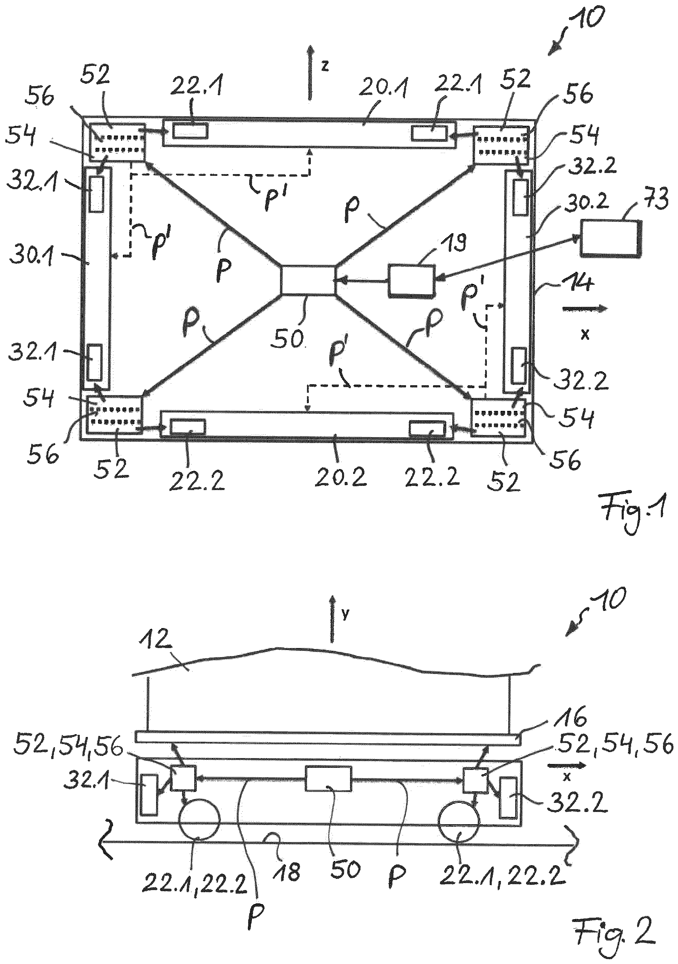

In Fig. 1 und 2 ist stark schematisiert ein erstes Ausführungsbeispiel einer Palettentransportvorrichtung 10 dargestellt, die zum Transport von Paletten 12 mit darauf befindlichem Lagergut eingesetzt wird und zwar innerhalb eines in Fig. 1 und 2 nicht näher dargestellten orthogonalen Regalsystems (x-y-z-Koordinatensystem) entlang von Fahrwegen in x-Richtung (Längsrichtung) und z-Richtung (Querrichtung). Die Längsrichtung x und die Querrichtung z sind dabei Komponenten eines orthogonalen Wegesystems innerhalb des Regalsystems, wobei zum Transport des Palettenguts in Höhenrichtung y in die jeweiligen Stockwerke des Regalsystems nicht näher darge-stellte Transportmittel, zum Beispiel Aufzüge, eingesetzt werden können.

Die Palettentransportvorrichtung 10 besitzt ein Chassis 14, an der ein linkes und rechtes x-Fahrwerk 20.1, 20.2 und ein linkes und rechtes z-Fahrwerk 30.1, 30.2 vorhanden ist, wobei beide linken und rechten Fahrwerke 20.1, 20.2, 30.1, 30.2 jeweils zwei linke x-Radeinheiten 22.1 und rechte x-Radeinheiten 22.2 beziehungsweise zwei linke z-Radeinheiten 32.1 und zwei rechte z-Radeinheiten 32.2 aufweisen. Die Fahrwerke 20, 30 beziehungsweise die Radeinheiten 22, 32 sind höhenverschiebbar, das heißt in y-Richtung an dem Chassis 14 vorhanden.

Die Höhenverschieblichkeit wird dadurch gewährleistet, dass für die x-Fahrwerke 20 beziehungsweise x-Radeinheiten 22 jeweils eine x-Hubeinrichtung 52 vorhanden ist und für die z-Fahrwerke 30 beziehungsweise die z-Radeinheiten 32 jeweils eine z-Hubeinrichtung 54 vorhanden ist, mittels derer die jeweilige Hubposition zur Bestimmung des Fahrweges in x- oder z-Richtung eingestellt werden kann.

In dem dargestellten Ausführungsbeispiel ist ein Hubantriebsaggregat 50 vorhanden, das mit den Hubeinrichtungen 52, 54 über nicht näher dargestellte Kopplungsmittel (symbolisch durch Pfeile P dargestellt) antriebsmäßig verbunden ist. Diese in Fig. 1 und 2 nicht näher dargestellten Kopplungsmittel können beispielsweise Getriebe, Gelenkwellen, Zahnriemen, Ketten, Spindeln oder dergleichen Drehmomente übertragende Mittel aufweisen.

In den Figuren 1 und 2 ist jeder Radeinheit 22, 32 eine x-/z- Hubeinrichtung 52 beziehungsweise 54 zugeordnet.

Das Hubantriebsaggregat steht mit einer Hubsteuereinrichtung 19 steuerungsmäßig in Kommunikationsverbindung, wobei die Hubsteuereinrichtung 19 mit einer übergeordneten Regalsystemsteuereinrichtung 73 kommuniziert.

Sobald die Palettentransportvorrichtung 10 in x-Richtung bewegt werden soll, werden die linken und rechten x-Radeinheiten 22 jeweils über die x-Hubeinrichtung 52 in Kontakt mit dem Fahrweg 18 gebracht, wobei gleichzeitig die z-Radeinheiten 32 außer Kontakt mit dem Fahrweg 18 stehen. Soll die Palettentransportvorrichtung 10 in z-Richtung verfahren werden, stehen die z-Radeinheiten 32 mit dem Fahrweg 18 in Kontakt und die x-Radeinheiten 22 sind beabstandet von diesem vorhanden.

Der Antrieb aller Radeinheiten erfolgt über in Fig. 1 und 2 nicht näher dargestellte Fahrantriebsaggregate, die weiter unten beschrieben werden.

Das Hubantriebsaggregat 50 wird über eine Hubsteuereinrichtung 19 mit entsprechenden Signalen beaufschlagt, damit die entsprechenden Radeinheiten 22, 32 je nach Fahrrichtung x oder z über das Hubantriebsaggregat 50, die Kopplungsmittel und die x-/z-Hubeinrichtungen 52, 54 mit dem Fahrweg 18 in Kontakt beziehungsweise nicht in Kontakt bringbar sind.

In Fig. 2 ist eine Situation dargestellt, in der die linken und rechten x-Radeinheiten 22 mit dem Fahrweg 18 in Kontakt stehen und die linken und rechten z-Radeinheiten 32.1, 32.2 in y-Richtung angehoben zum Fahrweg 18 vorhanden sind, das heißt dass sich die Palettentransportvorrichtung 10 in einem Zustand zum Verfahren in x-Richtung befindet. Zusätzlich ist in Fig. 2 noch oberseitig des Chassis 14 eine Palettenaufnahmeeinheit 16 dargestellt, die zur Aufnahme einer Paletten mit entsprechenden Lagergut ausgebildet ist. Die Palettenaufnahmeeinheit 16 ist über eine weitere Hubeinrichtung 56 ebenfalls in Höhenrichtung y verschieblich vorhanden, da es erforderlich ist beispielsweise an Übergabestationen, dass die Palettenaufnahmeeinheit 16 in einen gewissem Maß angehoben wird. Diesbezüglich ist zusätzlich eine y-Hubeinrichtung 56 vorhanden, die ebenfalls über das Hubantriebsaggregat 50 angesteuert wird.

Ergänzend ist in Fig. 1 durch gestrichelte Pfeile P' das Einwirken der Hubeinrichtungen 52, 54 alternativ auf die x-/z- Fahrwerke 20, 30 dargestellt, die die jeweils zwei x- beziehungsweise z-Radeinheiten 22, 32 enthalten.

Bei der Palettentransportvorrichtung 10 gemäß den Figuren 1 und 2 sind somit 3 unabhängige Hubeinrichtungen 52, 54 und 56 vorhanden, die im Prinzip unabhängig voneinander von einem Hubantriebsaggregat 50 zur Höhenpositionierung (y-Richtung) der jeweiligen Position der Fahrwerke 20, 30 beziehungsweise der Radeinheiten 22, 32 beziehungsweise der Palettenaufnahmeeinheit 16 dienen.

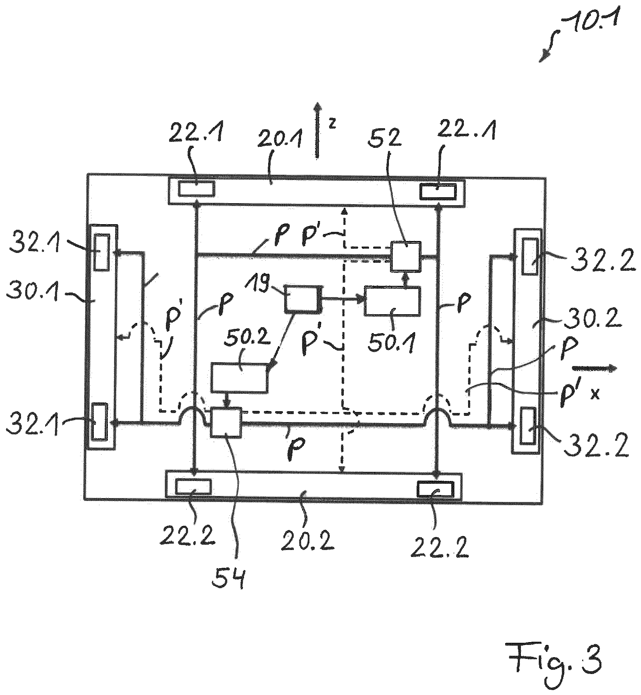

Eine alternative Ausgestaltung der Palettentransportvorrichtung 10.1 im Vergleich zur Palettentransportvorrichtung 10 gemäß den Figuren 1 und 2 ist in Fig. 3 dargestellt. Gleiche Bauteile tragen dasselbe Bezugszeichen und werden nicht nochmals erläutert.

Im Unterschied zu der Palettentransportvorrichtung 10 gemäß Fig. 1 und 2 weist die Palettentransportvorrichtung 10.1 gemäß Fig. 3 ein x-Hubantriebsaggregat 50.1 und z-Hubantriebsaggregat 50.2 auf, die mit der x-Hubeinrichtung 52 beziehungsweise z-Hubeinrichtung 54 über Kopplungsmittel mit den Fahrwerken 20, 30 beziehungsweise Radeinheiten 22, 32 antriebsmäßig gekoppelt sind.

Das x-Hubantriebsaggregat 50.1 veranlasst dabei über die x-Hubeinrichtung 52 das Anheben beziehungsweise Absenken des linken und rechten x-Fahrwerkes 20.1, 20.2 beziehungsweise der linken und rechten Radeinheiten 22.1, 22.2. Ebenso veranlasst das z-Hubantriebsaggregat 52 über die z-Hubeinrichtung 54 das Heben beziehungsweise das Senken der linken und rechten z-Fahrwerke 30 beziehungsweise der linken und rechten z-Radeinheiten 32.

Sowohl bei dem Ausführungsbeispiel gemäß Fig. 1 und 2 als auch dem Ausführungsbeispiel gemäß Fig. 3 sind bei der Palettentransportvorrichtung 10 beziehungsweise 10.1 drei unabhängige Hubeinrichtungen 52, 54, 56 vorhanden, mittels derer die Hubbewegung des x-Fahrwerkes 20 beziehungsweise des z-Fahrwerkes 30 und/oder die Hubbewegung der Palettenaufnahmeeinheit 16 unabhängig voneinander bewerkstelligt werden können.

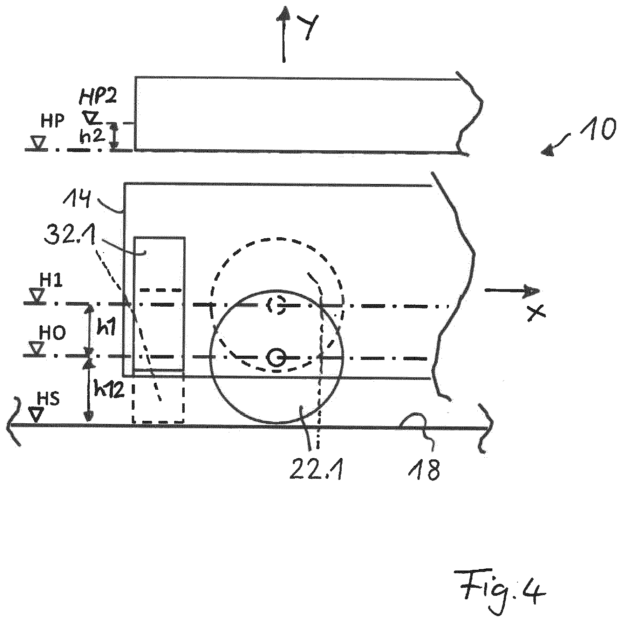

In Fig. 4 ist schematisch die Höhenposition einer x-Radeinheit 22.1 beziehungsweise einer z-Radeinheit 32.1 im Eckbereich der Palettentransportvorrichtung 10 dargestellt. Die Drehachse der x-Radeinheit 22.1 befindet sich relativ zu dem Höhenniveau HS des Fahrweges 18 auf dem Höhenniveau H0 so dass die x-Radeinheit 32.1 mit dem Fahrweg 18 Kontakt hat und bei Beaufschlagung durch ein Fahrantriebsaggregat ein Verfahren der Palettentransportvorrichtung 10 in x-Richtung ermöglicht. Die z-Radeinheit 32 befindet sich in diesem Zustand im Höhenniveau H1 und ist beabstandet zum Fahrweg 18 angeordnet.

Das Höhenniveau der Palettenaufnahmeeinheit 16 ist in Fig. 4 mit HP bezeichnet. Die Differenz (Hubweg) zwischen dem Höhenniveau H1 und H0 ist in Fig. 4 mit h1 bezeichnet. Die Differenz zwischen dem Höhenniveau H0 und HS ist mit h12 bezeichnet und hängt von dem jeweiligen Durchmesser der Radeinheiten 22, 32 ab.

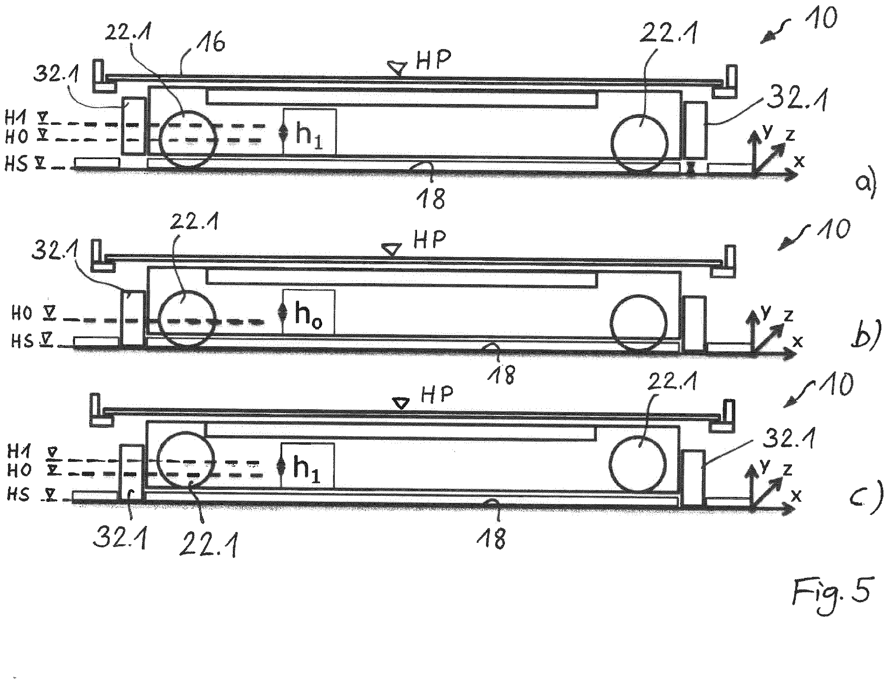

Ist nun ein Wechsel von der x-Fahrrichtung in die z-Fahrrichtung erforderlich, was über eine nicht näher dargestellte übergeordnete Steuerungsvorrichtung des Regalsystems festgelegt wird, mit der die Palettentransportvorrichtung 10 in Kommunikationsverbindung steht, wird im Stillstand zunächst über die z-Hubeinrichtung 54 unter Ansteuerung des Hubantriebsaggregats 50 die z-Radeinheit 32.1 beziehungsweise 32.2 von dem Höhenniveau H1 um das Maß h1 auf das Höhenniveau H0 abgesenkt, so dass sowohl die x-Radeinheiten 22 als auch die z-Radeinheiten 32 in Kontakt mit dem Fahrweg 18 stehen. Daran anschließend veranlasst das Hubantriebsaggregat 50 über die x-Hubeinrichtung 52 das Anheben der x-Radeinheiten 22.1 auf das Höhenniveau H1, so dass die x-Radeinheiten 22 außer Kontakt mit dem Fahrweg 18 kommen. Diese zeitliche Abfolge ist in den Figuren 5a, b und c in einer Seitenansicht ergänzend dargestellt. Die Hubbewegungen der x-Radeinheiten 22 beziehungsweise z-Radeinheiten 32 erfolgten dabei unabhängig von dem Höhenniveau der Palettenaufnahmeeinheit 16. In Fig. 5a, b und c ist die Situation dargestellt, in der die Palettenaufnahmeeinheit 16 sich in abgesenkter Position befindet.

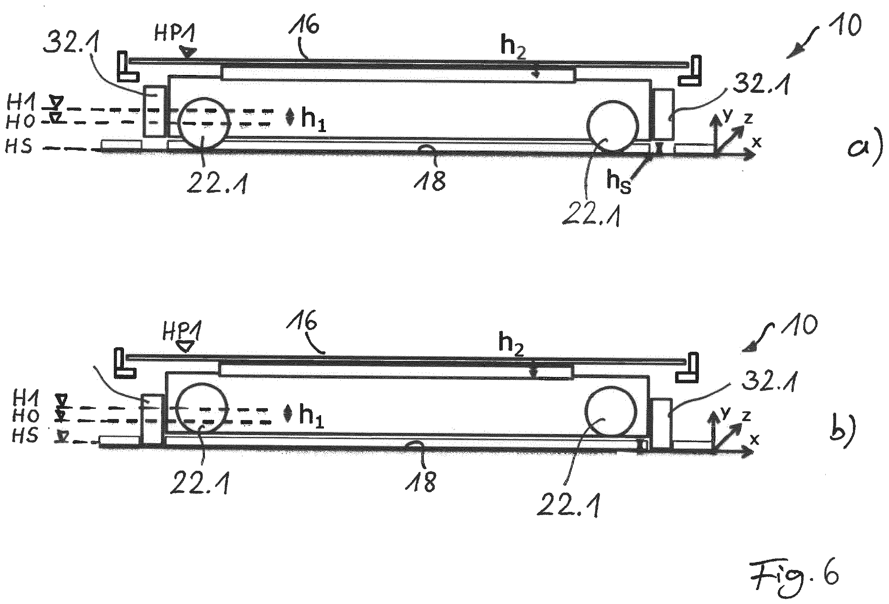

Erfindungsgemäß ist es auch möglich, die dargestellten Hubbewegungen der x-Radeinheiten 22 beziehungsweise z-Radeinheiten 32 auch durchzuführen, wenn die Palettenaufnahmeeinheit 16 sich in angehobener Position befindet, was in Fig. 6a und b schematisch dargestellt ist. Mit h2 ist in der Fig. 6b die Anhebung der Palettenaufnahmeeinheit 16 dargestellt.

Dadurch, dass erfindungsgemäß 3 unabhängige Hubeinrichtungen 52, 54, 56 vorhanden sind, ist es nicht mehr erforderlich - wie im Stand der Technik - dass bei einem Wechsel der Fahrrichtung von x- in z-Richtung und umgekehrt, die Palettenaufnahmeeinheit 16 mit dem darauf befindlichen Ladegut angehoben werden muss, was eine deutliche Energieeinsparung bedeutet, zumal das Ladegut ein nicht unerhebliches Gewicht aufweisen kann. Diese Maßnahmen wirken sich besonders vorteilhaft auf die gesamte Energieeffizienz des Regalsystems aus, da sich die Energieeinsparung bei jedem Richtungswechsel der Palettentransportvorrichtung 10 erzielen lässt.

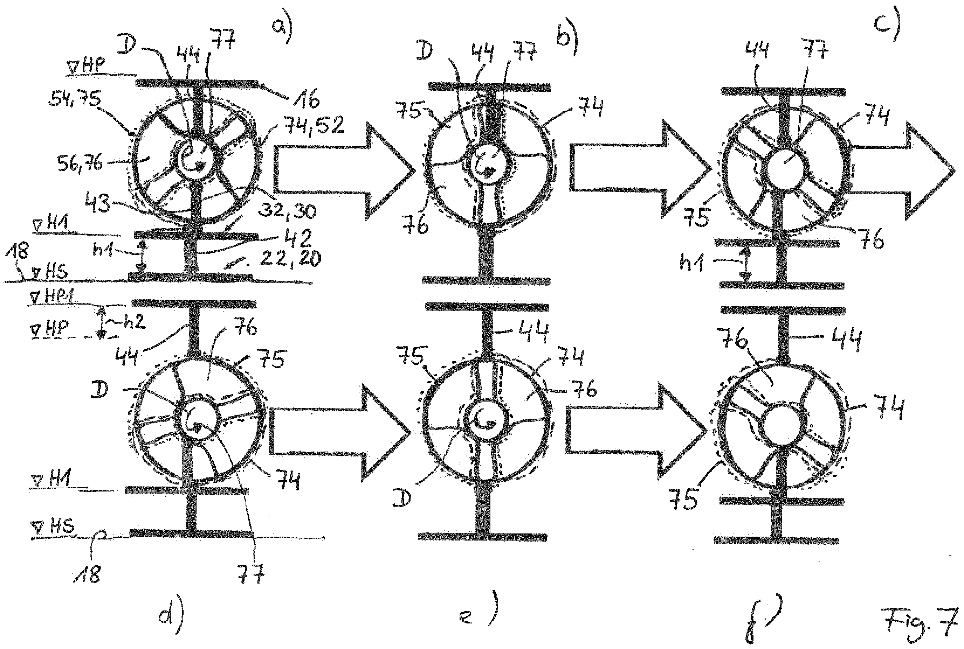

In den Figuren 7 ist stark schematisiert eine konstruktive Ausgestaltung der x-Hubeinrichtung 52, z-Hubeinrichtung 54 und y-Hubeinrichtung 56 dargestellt, die im Ausführungsbeispiel jeweils als Kurvenscheibe 74, 75, 76 ausgebildet sind, wobei die Kurvenscheiben 74, 75, 76 auf einer gemeinsamen Drehwelle 77 in deren Längsrichtung versetzt angeordnet sind, die jeweils über ein x-/z-/y-Kopplungselement 42, 43, 44 mit den entsprechenden Fahrwerken 20, 30 beziehungsweise Radeinheiten 22, 32 beziehungsweise der Palettenaufnahmeeinheit 16 in Kommunikationsverbindung stehen. Die gemeinsame Drehachse 77 wird dabei beispielsweise durch das gemeinsame Hubantriebsaggregat 50 angetrieben, wodurch die Hubbewegung der Fahrwerke 20, 30 beziehungsweise der Radeinheiten 22, 32 beziehungsweise der Palettenaufnahmeeinheit 16 in zeitlicher Abfolge jeweils gesteuert wird. Fig. 7a, b und c zeigen die Zustände bei abgesenkter Palettenaufnahmeeinheit 16. Fig. 7d, e und f zeigen die Zustände bei angehobener Palettenaufnahmeeinheit 16.

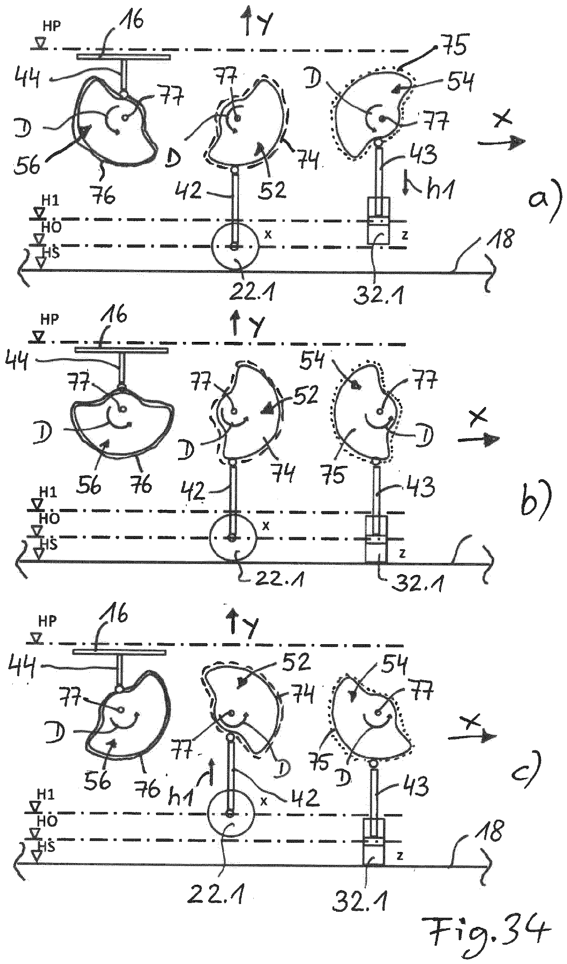

In den Figuren 34a, b und c in Verbindung mit den Figuren 7a bis f ist stark schematisiert die Hubvorrichtung mit einer x-Hubeinrichtung 52 für eine x-Radeinheit 22, eine z-Hubeinrichtung 54 für eine z-Radeinheit 32.1 und eine y-Hubeinrichtung 56 für die Palettenaufnahmeeinheit 16 dargestellt. Die Hubeinrichtungen 52, 54, 56 sind durch eine x-Kurvenscheibe 74, eine z-Kurvenscheibe 75 und eine y-Kurvenscheibe 76 ausgebildet, die auf einer gemeinsamen Drehachse 77 in Drehrichtung D drehbar angeordnet sind und über schematisch dargestellte x-/z-/y-Kopplungselemente 42, 43, 44 mit den Radeinheiten 22.1 beziehungsweise 32.1 beziehungsweise Palettenaufnahmeeinheit 16 gekoppelt sind. Die höhenverschieblich (in y-Richtung) verschiebbaren Kopplungselemente 42, 43, 44 stützen sich jeweils auf der Umfangskontur der zugehörigen Kurvenscheibe 74, 75, 76 ab, so dass bei entsprechender Drehung D der Kurvenscheiben die x-Radeinheit 22.1, die z-Radeinheit 32.1 und die Palettenaufnahmeeinheit 16 in zeitlicher Abfolge eine Hubbewegung durchführen. In Fig. 7 und 34 ist die Kurvengeometrie der y-Kurvenscheibe 76 mit einer durchgehenden Linie, die z-Kurvenscheibe 75 mit einer punktierten Linie und die x-Kurvenscheibe 74 mit einer gestrichelten Linie dargestellt. Das Höhenniveau des Fahrweges 18 ist mit HS angegeben.

In den Figuren 34 sind die Kurvenscheiben, die im Ausführungsbeispiel hintereinander auf einer gemeinsamen Drehachse 77 sind, der Übersichtlichkeit halber auseinander in den einzelnen jeweiligen Drehstellungen dargestellt.

Gemäß Fig. 7a beziehungsweise 34a ist die x-Radeinheit 22.1 zunächst mit dem Fahrweg 18 in Kontakt. Die Drehachse der x- Radeinheit 22.1 befindet sich dabei in dem Höhenniveau H0. In diesem Zustand ist ein Verfahren der Palettentransportvorrichtung in x-Richtung möglich. Die z-Radeinheit 32.1 befindet sich auf dem Höhenniveau H1 und steht in diesem Zustand nicht mit dem Fahrweg 18 in Kontakt. Die Palettenaufnahmeeinheit befindet sich im Höhenniveau HP.

Soll nun ein Richtungswechsel der Fahrbewegung von x- in z-Richtung erfolgen - im Stillstand - wird über das Hubantriebsaggregat 50 die Drehwelle 77 in Drehung D entgegen dem Uhrzeigersinn versetzt, wodurch zunächst die z-Radeinheit 32.1 nach unten auf den Fahrweg 18 (Höhenniveau HS) abgesenkt wird. Dieser Zustand ist in Fig. 7b beziehungsweise 34b dargestellt. Durch weitere Drehungen D der Drehachse 77 wird aufgrund der Kurvengeometrie der x-/z-Kurvenscheibe 52, 54 die x-Radeinheit 22.1 in y-Richtung auf das Höhenniveau H0 angehoben, so dass im Ergebnis danach die z-Radeinheit 32.1 mit dem Fahrweg 18 in Kontakt steht und die Palettentransportvorrichtung 10 in z-Richtung verfahren werden kann. Bei der genannten Drehbewegung befindet sich die Palettenaufnahmeeinheit 16 in der eingefahrenen unteren Höhenposition HP, ohne das es zu einer Höhenverschiebung kommt.

Die beschriebenen Hubeinrichtungen 52, 54, 56 sind gemäß der Darstellung in Fig. 1 in jedem Eckbereich des Chassis 14 der Palettentransportvorrichtung 10 vorhanden und mit der jeweils benachbarten x-Radeinheit 22 beziehungsweise z-Radeinheit 32 bewegungsmäßig über die x-/z-Kurvenscheibe 74, 75 in Höhenrichtung gekoppelt. Ebenso ist die Palettenaufnahmeeinheit 16 über ihre eigene z-Kurvenscheibe 75 in den vier Eckpunkten höhenmäßig gekoppelt.

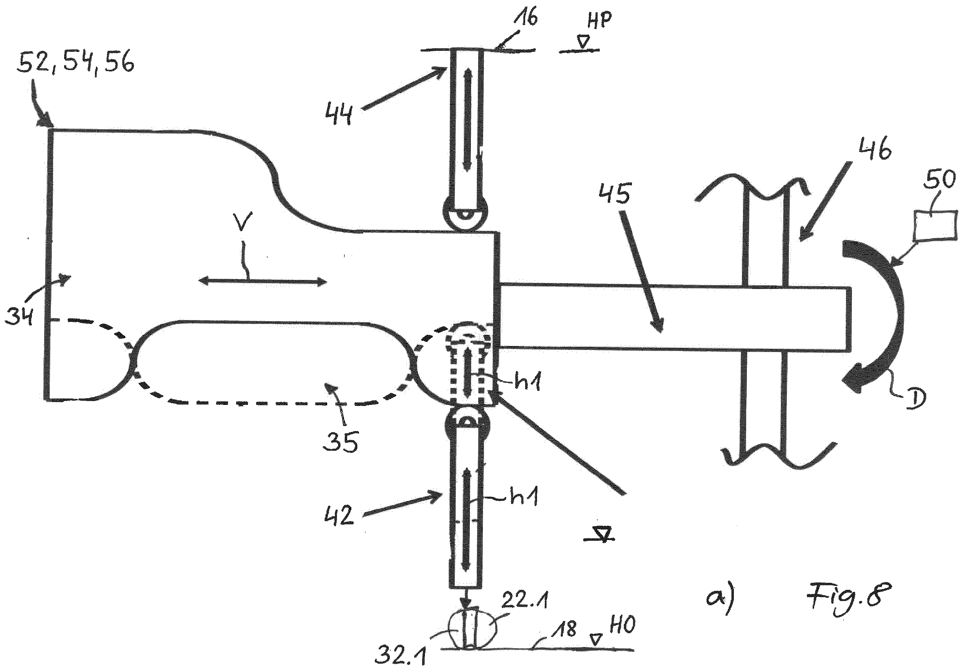

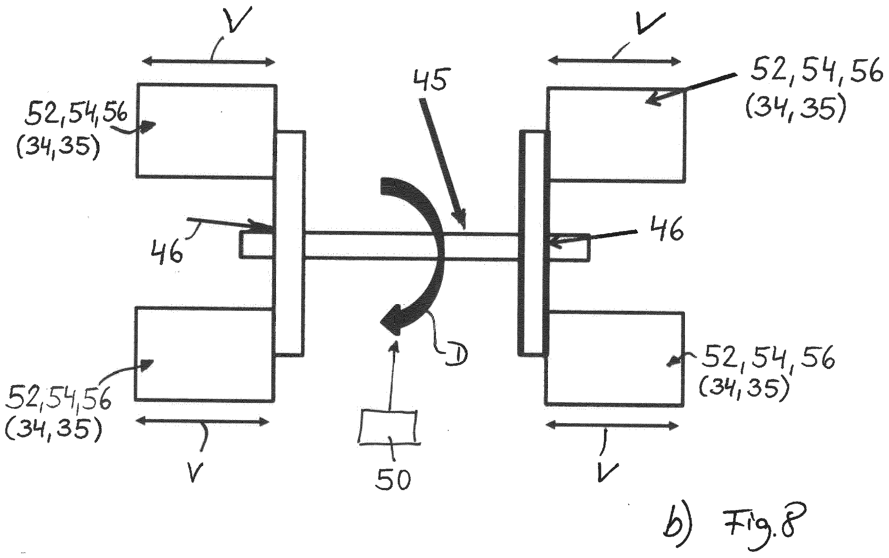

In den Figuren 8a und b ist stark schematisiert eine alternative Ausgestaltung der Hubeinrichtungen 52, 54, 56 dargestellt, die als verschiebliche Kulisseneinheiten 34, 35 ausgebildet sind, die an ein Hubantriebsaggregat 50 gekoppelt sind, das die Verschiebung V der Kulisseneinheiten 34, 35 zur Veranlassung der Hubbewegung der Fahrwerke 20, 30 beziehungsweise der Radeinheiten 22, 32 entsprechend veranlasst. Die Kulisseneinheit 34 ist dabei als eine Kulissenscheibe ausgebildet, deren untere Kontur die Hubbewegung der x-Radeinheiten 22 und die obere Kontur die Hubbewegung der Palettenaufnahmeeinheit 16 steuert. Somit stellt die Kulisseneinheit 34 quasi x-/y-Hubeinrichtungen 52, 56 dar.

Somit sind die Hubeinrichtungen 52, 54, 56 durch die längsverschieblich V gelagerte x-Kulissenscheibe 34 und z-Kulissenscheibe 35 gebildet, die in Verschieberichtung jeweils eine Kulissenkontur aufweisen, an die die Kopplungselemente 42, 43 für die x-Radeinheit 22 beziehungsweise z-Radeinheit kontaktmäßig angeschlossen sind. Die x-Kulissenscheibe 34 weist oberseitig eine weitere Profilierung auf, die mit dem Kopplungselement 44 für die Palettenaufnahmeeinheit 16 gekoppelt ist. Bei einer Längsverschiebung der Kurvenscheiben 34, 35 führen die x-Radeinheiten 22 beziehungsweise z-Radeinheit 32 und die Palettenaufnahmeeinheit 16 entsprechend der jeweiligen Kulissenscheibenkontur eine Hubbewegung durch, deren zeitlich Abfolge und Größe dem Bewegungsablauf entspricht wie er in Bezug auf die Figuren 7 und 34 beschrieben ist. Die jeweilige Längsverschiebung V wird dadurch bewirkt, dass die Kulissenscheiben 34, 35 an eine Spindelmutter 46 einer Spindel 45 gekoppelt sind und die Spindel 45 selbst über das Hubantriebsaggregat in Drehbewegug D versetzt wird, um die Verschiebebewegung der Kulissenscheiben 34, 35 um die sich daraus ergebenden Hubbewegungen der Radeinheiten 22, 32 in die Wege zu leiten.

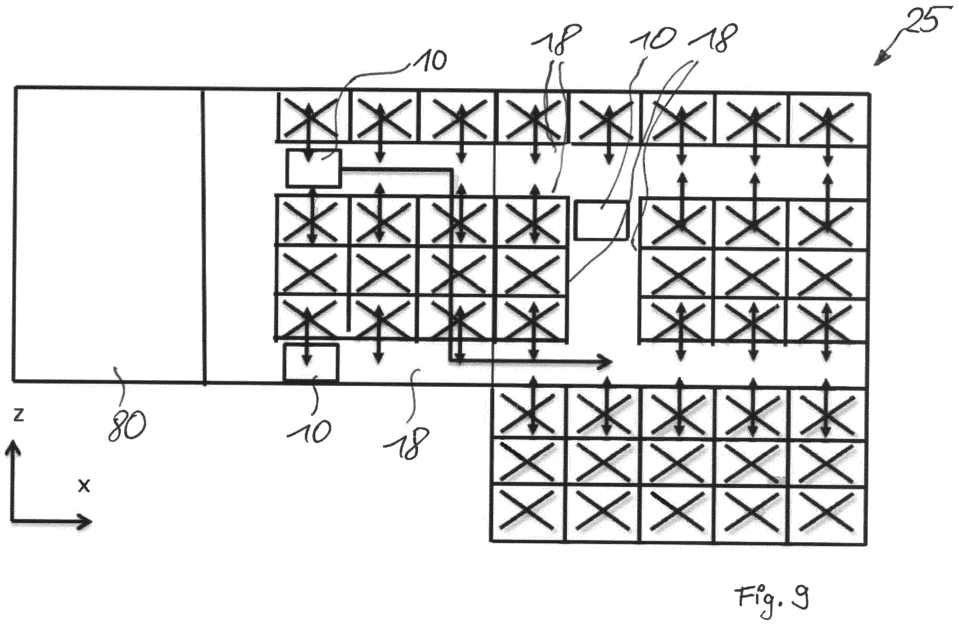

Fig. 9 zeigt stark vereinfacht die Draufsicht auf ein Regalsystem 25, das in dem besagten orthogonalen System x-z bezüglich der Fahrwege 18 der Palettentransportvorrichtung 10 ausgebildet ist und darüber hinaus eine Vorzone 80 umfasst, innerhalb derer die dargestellten Palettentransportvorrichtungen 10 auch verfahren werden können, ohne an das orthogonale Fahrwegsystem x-z des eigentlichen Regalsystems 25 gebunden zu sein, was weiter unten beschrieben wird.

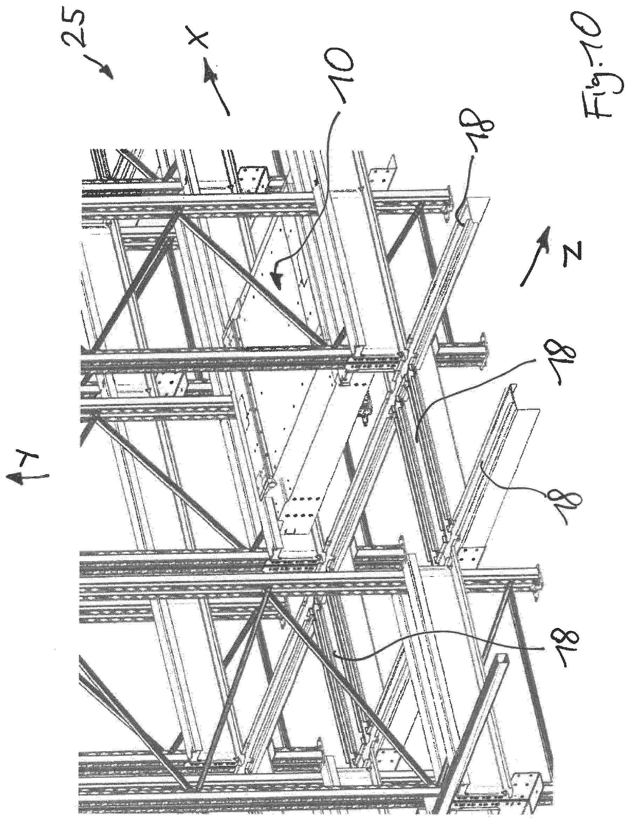

In Fig. 10 ist in einem Perspektivdetailausschnitt ein Regalsystem 25 dargestellt, das in einem orthogonalen Raster x, y, z ausgebildet ist, wobei das Tragsystem aus einzelnen in x-, y- und z-Richtung angeordneten Profilen besteht, die Fahrwege bilden, innerhalb derer die erfindungsgemäße Palettentransportvorrichtung 10 verfahrbar in x- und z-Richtung vorhanden ist.

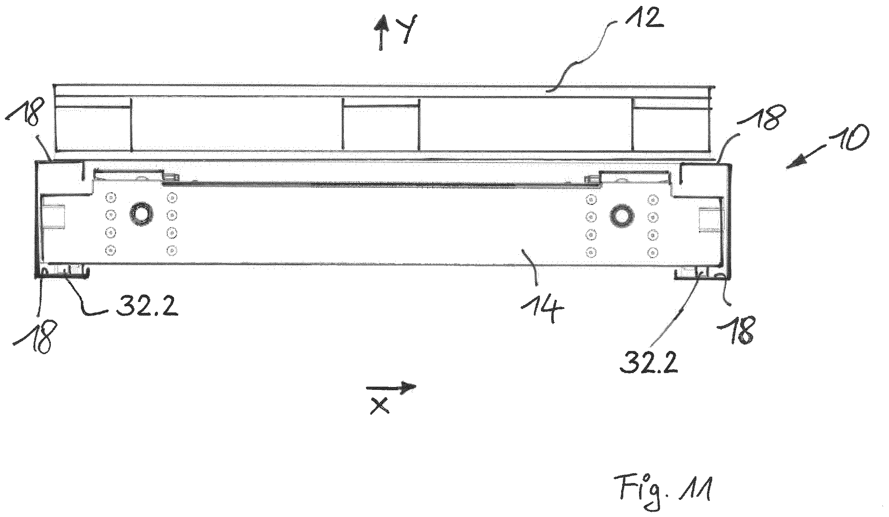

Fig. 11 zeigt in einer Seitenansicht ein konstruktives Ausführungsbeispiel einer Palettentransportvorrichtung 10 mit aufgelegter Palette 12. Die Palette 12 ist geeignet, ein in Fig. 11 nicht näher dargestelltes Ladegut im Einzelfall aufzunehmen. Die in Fig. 11 dargestellte Palettentransportvorrichtung 10 ist entsprechend der vorherigen Beschreibung mit unabhängigen Hubeinrichtungen in x-, z- und y-Richtung ausgestattet, die über entsprechende Antriebsaggregate getrennt und gesteuert angefahren werden können, um die Fahrrichtung x, z zu wechseln oder die Palettenaufnahmeeinheit 16 bedarfsweise anzuheben oder abzusenken.

Bei den Hubeinrichtungen gemäß den Figuren 7 und 8 ist jede x- und z-Radeinheit 22, 32 gemäß der schematisierten Darstellung in Fig. 1 jeweils einer Hubeinrichtung zugeordnet, die von einem zentralen Hubantriebsaggregat 50 angetrieben wird.

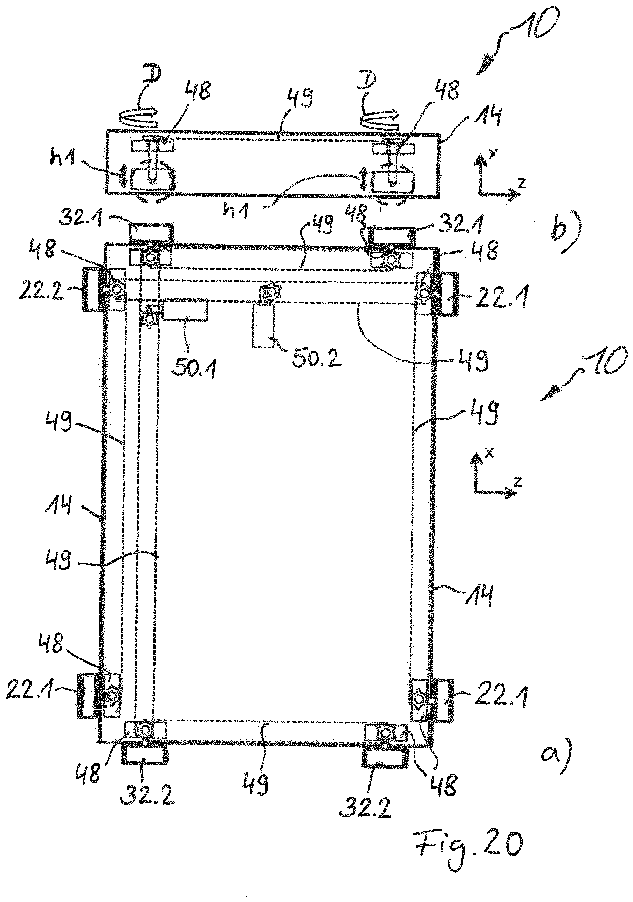

In den Figuren 20 bis 32 sind konstruktive Ausgestaltungen der Hubeinrichtungen für die x- und z-Radeinheiten 22, 32 dargestellt, die auf dem in Fig. 3 dargestellten Prinzip beruhen, das heißt es ist ein x-Hubantriebsaggregat 50.1 für die beidseitigen x-Radeinheiten 22.1, 22.2 und ein z-Hubantriebsaggregat 50.2 für die beidseitigen z-Radeinheiten 32.1, 32.2 vorhanden.

Gemäß dem in Fig. 20 dargestellten Ausführungsbeispiel ist jeder x-Radeinheit 22 und jeder z-Radeinheit 32 zur Höhenverstellung eine Radspindeleinheit 48 zugeordnet, wobei die Kopplung der x-beziehungsweise z-Radeinheiten 22, 32 untereinander über Ketten oder Riemen 49 oder auch über eine Welle erfolgen kann und diese Kopplungsart auch für die Kopplung der Hubantriebsaggregate 50.1 beziehungsweise 50.2 ebenfalls eingesetzt wird. Durch das Ansteuern des x-Hubantriebsaggregat 50.1 führen somit alle x-Radeinheiten 22 und durch das Ansteuern des z-Hubantriebsaggregats 50.2 alle z-Radeinheiten 32 eine entsprechende Höhenbewegung durch. Diese Ausführungsvariante gemäß Fig. 20 zeichnet sich durch einen direkten Kraftfluss aus und ermöglicht eine leichte Konstruktion, wobei das Konstruktionsprinzip sowohl für die x- als auch für z-Radeinheiten 22, 32 gleich ausgebildet ist.

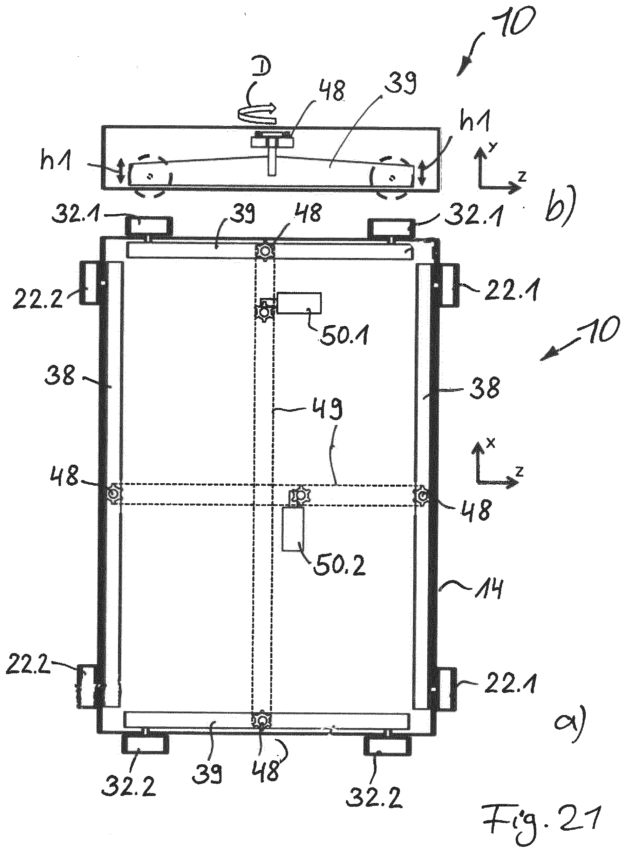

Die in Fig. 21 dargestellte Konstruktion unterscheidet sich von der Konstruktion gemäß Fig. 20 dadurch, dass in die x-/z-Seite jeweils eine Spindeleinheit 48 eingesetzt wird, die mit einem x-Verbindungsprofil 38 beziehungsweise einem z-Verbindungsprofil 39 gekoppelt ist, an dessen Endbereichen jeweils die x- beziehungsweise z-Radeinheit 22, 32 angeschlossen ist. Dadurch werden weniger Teile benötigt und es entsteht ein relativ freier Bauraum für den Radantrieb.

Die Kopplung der Radspindeleinheiten 48 untereinander und mit dem zugehörigen Hubantriebsaggregat 50.1, 50.2 erfolgt beispielsweise über einen Zahnriemen 49.

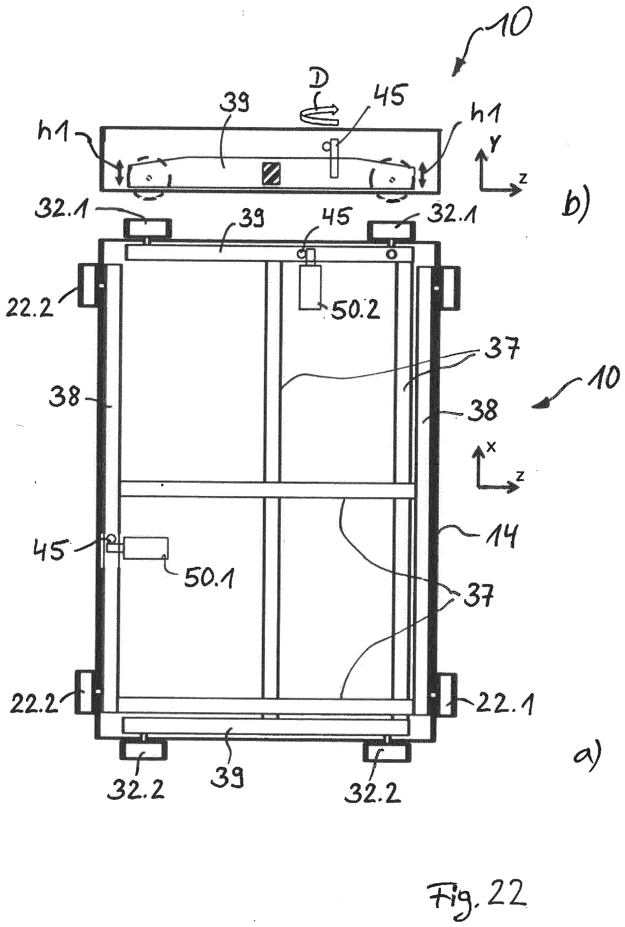

Bei der konstruktiven Ausgestaltung gemäß Fig. 22 ist pro Seite jeweils ein x-Verbindungsprofil 38 beziehungsweise ein z-Verbindungsprofil 39 vorhanden, das die Radeinheiten 22, 32 miteinander koppelt, wobei die Verbindungsprofile 38, 39 über Rahmenprofile 37 zu einem steifem Rahmen verbunden sind. Dabei ist eine Spindel 45 direkt an einem x-Verbindungsprofil 38 und an einem z-Verbindungsprofil 39 direkt angeordnet, an der das zugehörige Hubantriebsaggregat 50.1 beziehungsweise 50.2 direkt angreift.

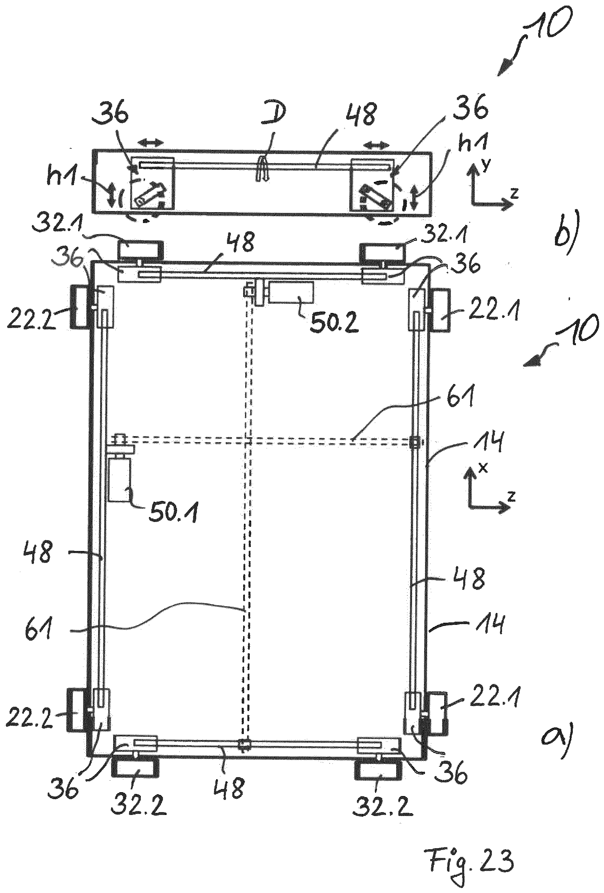

Bei der konstruktiven Ausgestaltung gemäß Fig. 23 wird pro Radseite jeweils eine Spindeleinheit 48 in Kombination mit einer Kulisse 36 eingesetzt, an der die Radeinheiten 22, 32 angelenkt sind. Die gegenüberliegenden Spindeleinheiten 48 sind über einen Zahnriemen 61 gekoppelt.

Durch Drehung D der Spindeleinheit 48 wird die Kulisse 36 verschoben und über einen Gelenkhebel die Höhe der zugehörigen Radeinheit 22, 32 eingestellt.

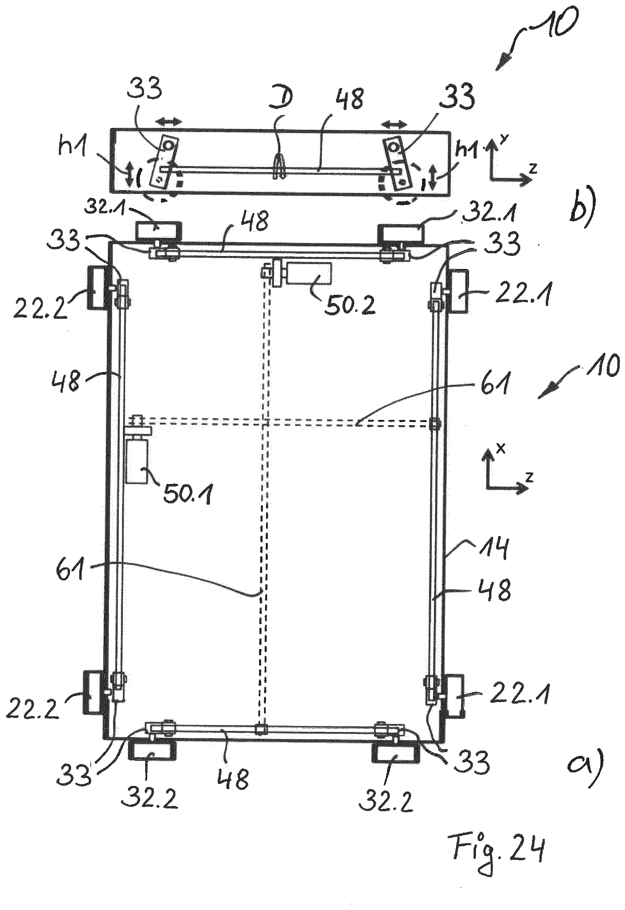

Bei der konstruktiven Ausgestaltung gemäß Fig. 24 wird neben einer Spindeleinheit 48 ein im jeweiligen Endbereich an die Spindeleinheit 48 angeschlossener Drehhebel 33 eingesetzt, der mit den Radeinheit 22 beziehungsweise 32 gekoppelt ist, an dem Chassis 14 angelenkt ist, und dessen Drehung eine Höhenverschiebung der Radeinheiten 22, 32 bewirkt.

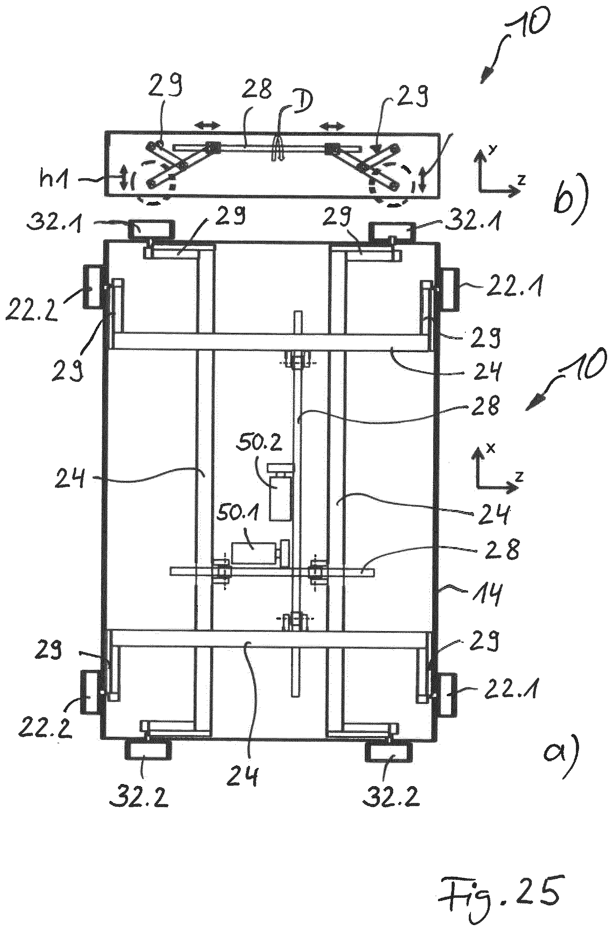

Fig. 25 zeigt ein konstruktives Ausführungsbeispiel, bei der eine Doppelspindeleinheit 28 eingesetzt wird, die jeweils über einen Scherenmechanismus 29 mit den Radeinheiten 22, 32 gekoppelt ist, der bei Drehung D der Doppelspindeleinheit 28 eine Höhenverschiebung H1 der Radeinheiten 22 beziehungsweise 32 veranlasst. Die Scherenmechanismen 29 gegenüberliegender Seiten sind dabei über ein Verbindungsprofil 24 miteinander gekoppelt. Auf dieses Verbindungsprofil 24 wirkt die Doppelspindeleinheit 28 verschiebemäßig ein. Diese Lösung hat den Vorteil, dass nur ein Spindelantrieb jeweils für die x-beziehungsweise z-Radeinheiten 22, 32 erforderlich ist. Die Spindelhöhenlage variiert bei Durchführung der Hubbewegung nicht und es findet keine Lageveränderung der Radeinheiten statt.

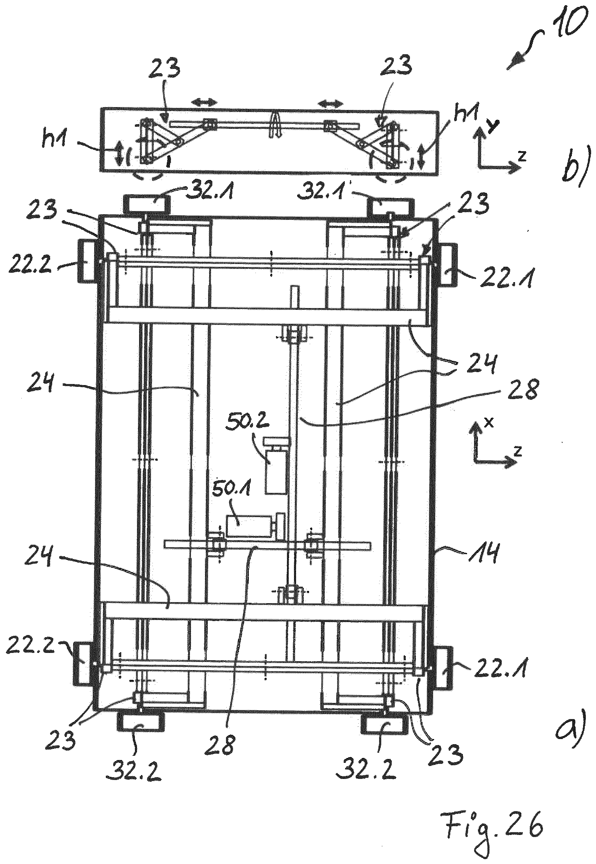

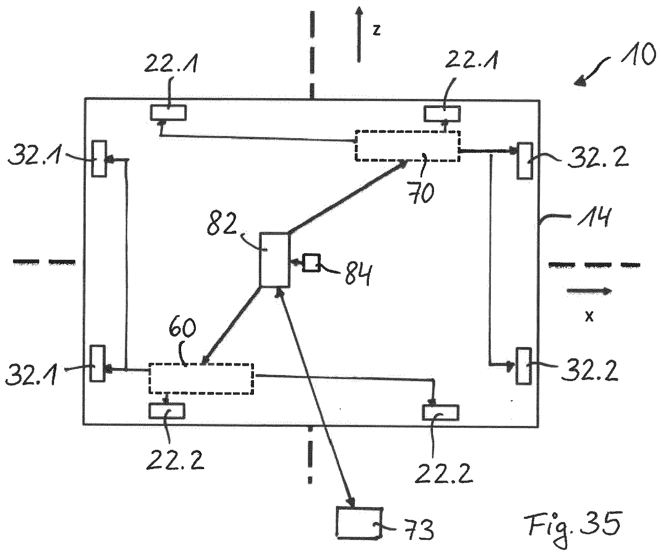

Das in Fig. 26 dargestellte konstruktive Ausführungsbeispiel unterscheidet sich von dem in Fig. 35 dargestellten Ausführungsbeispiel dadurch, dass anstelle des einfachen Scherenmechanismus 29 ein Doppelscherenmechanismus 23 vorhanden ist, der die Stabilität erhöht.

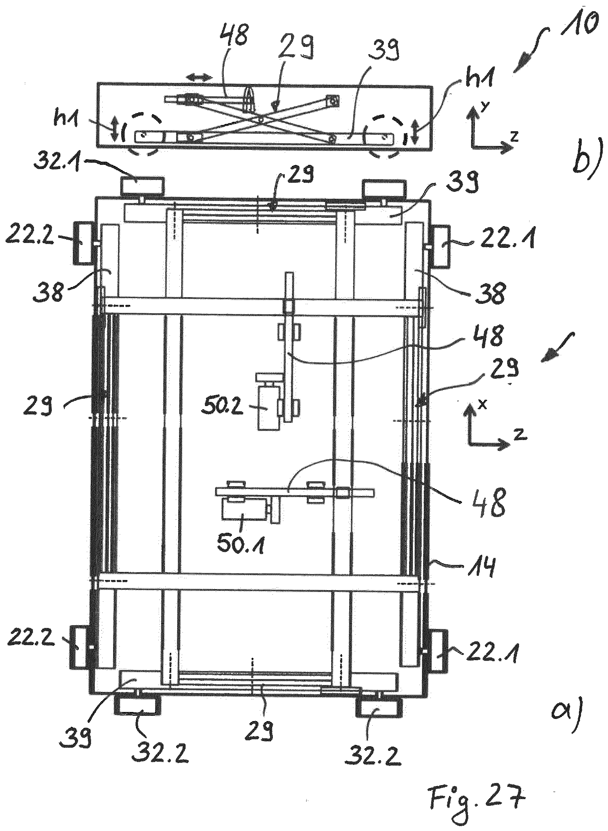

Die Ausführungsform gemäß Fig. 27 besitzt ebenfalls einen Scherenmechanismus 29, der jedoch mittig pro Seite angeordnet ist, wobei auf jeder Seite ein x-Verbindungsprofil 38 beziehungsweise ein z-Verbindungsprofil 39 vorhanden ist, das an den Scherenmechanismus 29 gelenkig angeschlossen ist und die zugehörigen Radeinheiten 22, 32 pro Seite miteinander verbindet.

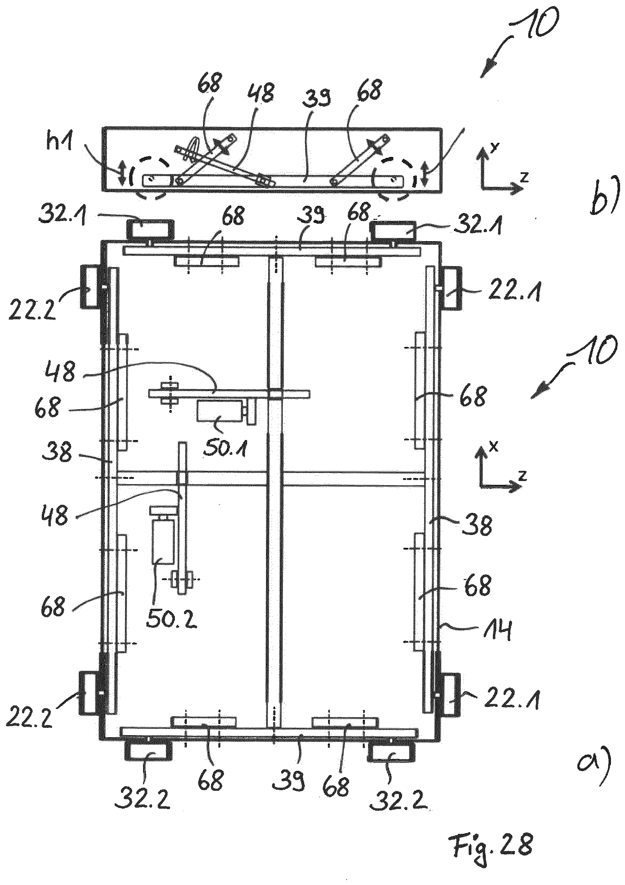

Die konstruktive Ausführungsvariante gemäß Fig. 28 besitzt ebenfalls ein x- und ein z-Verbindungsprofil 38, 39, auf das die Spindeleinheit 48 einwirkt, wobei die Verbindungsprofile 38 jeweils über zwei parallel gelenkig angeschlossene Doppelhebel 68 bewegbar sind, um die Höhenbewegung der Radeinheiten 22, 32 bei Aktivierung der Spindeleinheit 48 umzusetzen.

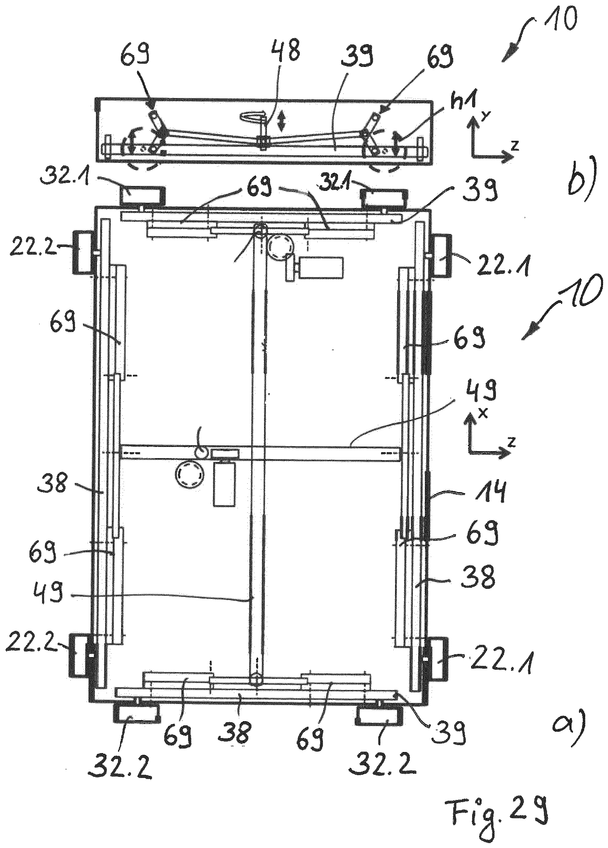

Die konstruktive Ausführungsvariante gemäß Fig. 29 zeigt pro Radseiteneinheit einen Kniehebelmechanismus 69, der jeweils an ein die Radeinheiten 22 beziehungsweise 32 verbindendes Verbindungsprofil 38 beziehungsweise 39 angelenkt ist. Auf dem Kniehebelmechanismus 69 wirkt mittig pro Seite eine Spindeleinheit 48 ein, die eine Verschiebebewegung des Kniehebelmechanismus 69 zu beiden Seiten und damit eine Höhenbewegung H1 der Radeinheiten 22 beziehungsweise 32 veranlasst. Die Kniehebelmechanismen 69 gegenüberliegenden Seiten können dabei über eine starre Verbindung oder eine Kette oder einen Riemen 49 miteinander gekoppelt sein.

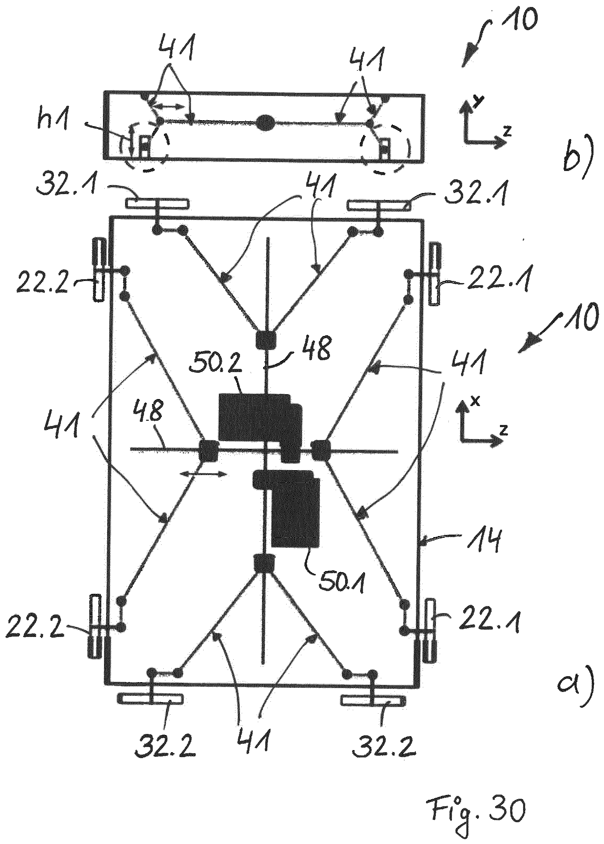

Die konstruktive Ausgestaltung gemäß Fig. 30 zeigt den Einsatz einer Doppelspindeleinheit 28, an die für jede Radeinheit in zugehöriger x-beziehungsweise z-Richtung ein waagerecht angeordneter Kniehebelmechanismus 41 angeschlossen ist über den die Höhenbewegung h1 der Radeinheiten 22, 32 erfolgt.

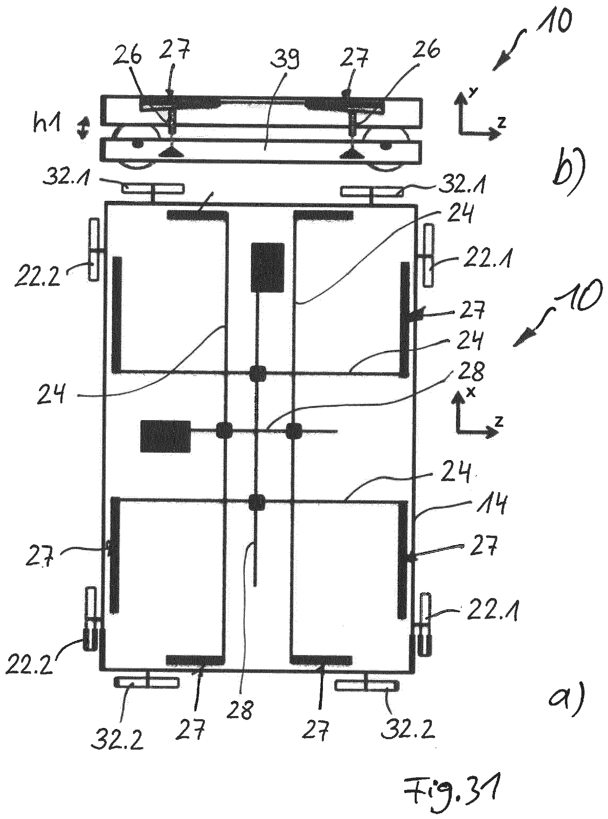

Fig. 31 zeigt eine konstruktive Ausführungsvariante, bei der pro Seite jeweils eine Doppelspindeleinheit 28 eingesetzt wird, die über jeweils ein Verbindungsprofil 24 mit einer verschiebbaren Keileinheit 27 verbunden ist, wobei an jeder Keileinheit 27 unterseitig ein Koppelglied 26 mit dem x-Verbindungsprofil 38 beziehungsweise dem z-Verbindungsprofil 39 der Radeinheiten 22 beziehungsweise 32 verbunden ist, so dass durch Verschiebung der Keileinheit 27 eine Höhenbewegung der Radeinheiten 22, 32 erfolgt.

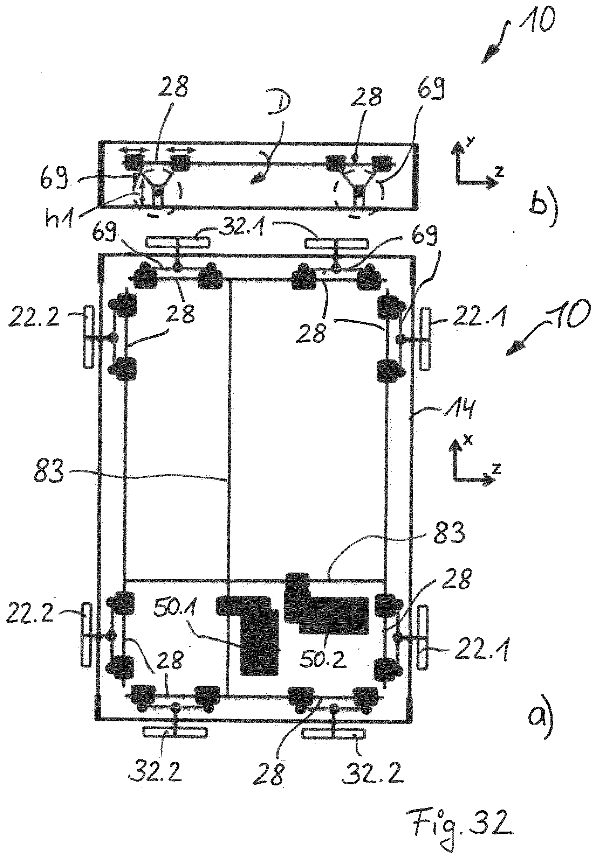

Fig. 32 zeigt schließlich eine Lösung, bei der für jede Radeinheit 22, 32 eine Doppelspindeleinheit 28 eingesetzt wird, an die für jede Radeinheit ein Kniehebelmechanismus 69 angelenkt ist. Die Doppelspindeleinheiten 28 werden über eine Antriebswelle 83 über die Hubantriebsaggregate 50.1, 50.2 angetrieben

In den obigen Ausführungsbeispielen sind verschiedene Varianten einer erfindungsgemäßen Palettentransportvorrichtung 10 dargestellt, bei denen es erfindungsgemäß darum ging, dass ein x-Fahrwerk 20 mit seinen x-Radeinheiten 22 und ein z-Fahrwerk 30 mit seinen z-Radeinheiten 32 in unterschiedliche Höhenniveaus angehoben beziehungsweise abgesenkt werden können ohne das eine Hubbewegung der Palettenaufnahmeeinheit 16 erfolgen muss. Die Hubbewegung erfolgt dabei durch Aktivierung einer x-Hubeinrichtung 52 oder einer z-Hubeinrichtung 54 mit einem Hubantriebsaggregat 50 oder mit einem x-Hubantriebsaggregat 50.1 und einem z-Hubantriebsaggregat 50.2. Die y-Hubeinrichtung 56 für die Palettenaufnahmeeinheit 16 wird ebenfalls über ein Hubantriebsaggregat 50 betrieben.

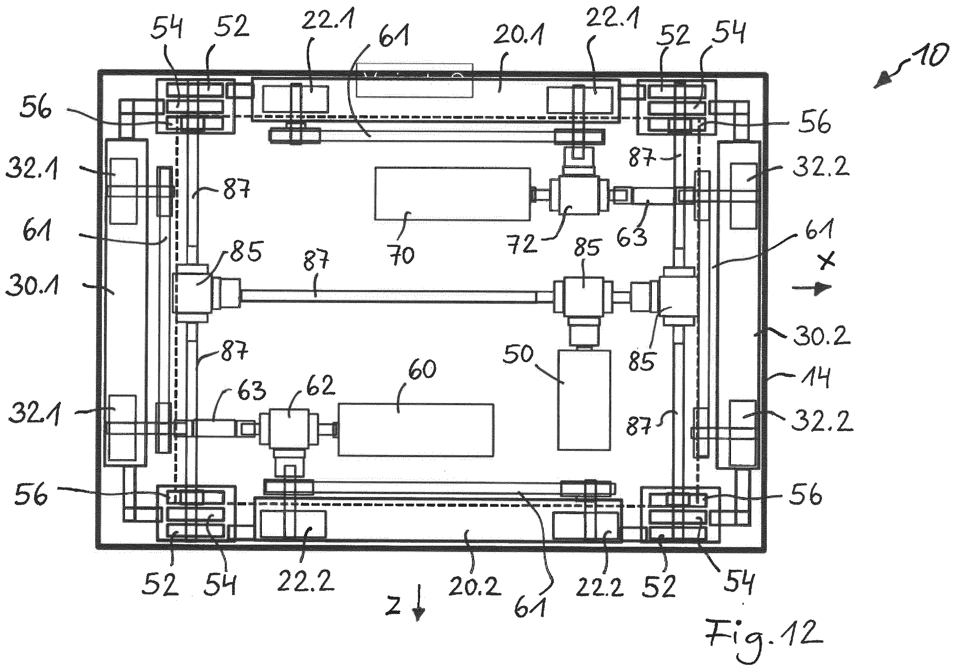

Fig. 12 zeigt eine schematisierte Draufsicht in Durchsicht einer erfindungsgemäßen Palettentransportvorrichtung 10 mit einem Hubantriebsaggregat für sämtliche Fahrwerke beziehungsweise Radeinheiten und zwei Fahrantriebsaggregaten 60, 70 für den Antrieb der x-/z-Radeinheiten 22, 32 in die jeweils erforderliche x- beziehungsweise z-Richtung des Regalsystems.

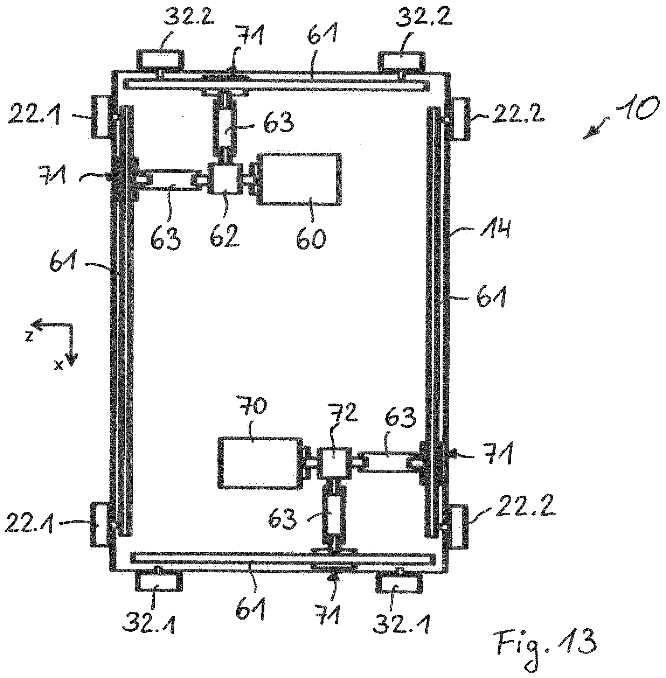

Unabhängig oder in Kombination mit den oben dargestellten Lösungen werden in den Figuren 13 bis 19 konstruktive Ausführungsvarianten einer erfindungsgemäßen Palettentransportvorrichtung 10 dargestellt, bei der auch die x-Fahrwerke 20 beziehungsweise x-Radeinheiten 22 und die z-Fahrwerke 30 und die z-Radeinheiten 32 in unterschiedlicher Höhenrichtung (y-Richtung) positioniert werden können - je nach angestrebter Fahrrichtung x oder z -, wobei jedoch erfindungsgemäß lediglich zwei Fahrantriebsaggregate, nämlich ein erstes Fahrantriebsaggregat 60 und ein zweites Fahrantriebsaggregat 70 eingesetzt wird, wobei jeder der Fahrantriebsaggregate 60, 70 an ein rechtes x-Fahrwerk 20.1 beziehungsweise rechte x-Radeinheiten 22.2 und an ein linkes z-Fahrwerk 30.1 beziehungsweise linke z-Radeinheiten 32.1 antriebsmäßig gekoppelt ist. Da die Fahrwerke beziehungsweise die Radeinheiten in unterschiedlichen Höhenpositionen anordenbar sind, sind zwischen den Fahrantriebsaggregaten 60, 70 Kopplungseinheiten vorhanden, die einen Höhenausgleich zwischen dem jeweiligen linken x-Fahrwerk 20.1 und dem rechten z-Fahrwerk 30.2 antriebsmäßig umsetzen können.

Fig. 13 zeigt ein konstruktive Ausführungsbeispiel bei dem das erste Fahrantriebsaggregat 60 und das zweite Fahrantriebsaggregat 70 ortsfest vorhanden sind. Sowohl die linken und rechten x-Radeinheiten 22.1, 22.2 als auch die linken und rechten z-Radeinheiten 32.1, 32.2 sind über ein Zahnriemen-Antrieb 61 jeweils auf jeder Seite miteinander gekoppelt. Es kann auch ein Kettenantrieb eingesetzt werden. Die Kopplungskonstruktion zwischen dem jeweils festen Fahrantriebsaggregat 60 beziehungsweise 70 erfolgt über ein Getriebe 62, an das jeweils eine Gelenkwelle 63 angeschlossen ist, die antriebsmäßig eine Verbindung jeweils zu den linken x-Radeinheiten 22.1 und rechten z-Radeinheiten 32.2 über Zwischenschaltung eines Omega-Antriebs 71 herstellt. Durch die Gelenkwellen 63 wird der Antrieb der x-Radeinheiten 22.1 und der z-Radeinheiten 32.2 auch bei unterschiedlicher Höhenposition immer gewährleistet, das heißt die Radeinheiten 22.1, 32.2 werden immer angetrieben, wobei je nach Fahrrichtung die x-Radeinheiten 22.1 oder die z-Radeinheiten 32.2 mit dem Fahrweg 18 Kontakt haben. Betreffend der rechten x-Radeinheiten 22.2 und der linken z-Radeinheiten 32.1 ist in Verbindung mit dem zweiten Fahrantriebsaggregat 70 derselbe Kopplungsmechanismus eingesetzt.

Diese Konstruktion gewährleistet immer eine konstante Vorspannung der Zahnriemen 61 und ermöglicht eine einfache ortsfeste Befestigung der Fahrantriebsaggregate 60, 70 am Palettenchassis 14.

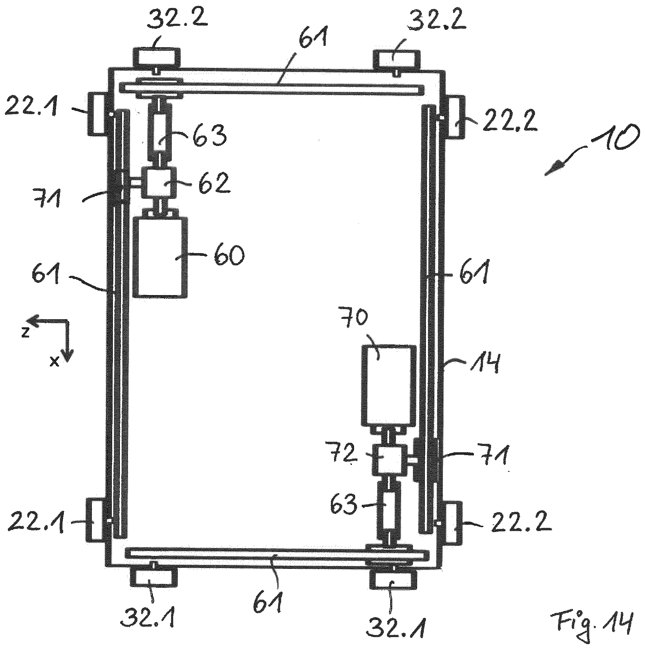

Die in Fig. 14 dargestellte konstruktive Ausführungsvariante unterscheidet sich von der Konstruktion gemäß Fig. 13 dadurch, dass das erste und zweite Fahrantriebsaggregat 60, 70 mit dem linken x-Fahrwerk 20.1 fest verbunden sind und somit eine zwischengeschaltete Gelenkwelle entfallen kann und zum rechten z-Fahrwerk 32.1 über die Gelenkwelle 63 direkt auf eine z-Radeinheit 32.2 antriebsmäßig angeschlossen sind. Der Anschluss an das linke x-Fahrwerk beziehungsweise den linken x-Zahnriemen 61 erfolgt wiederum über einen Omega-Antrieb 71.

Die rechten x-Radeinheiten 22.2 und linken z-Radeinheiten 32.1 sind entsprechend über das zweite Fahrantriebsaggregat 70 mit derselben Kopplungskonstruktion angeschlossen.

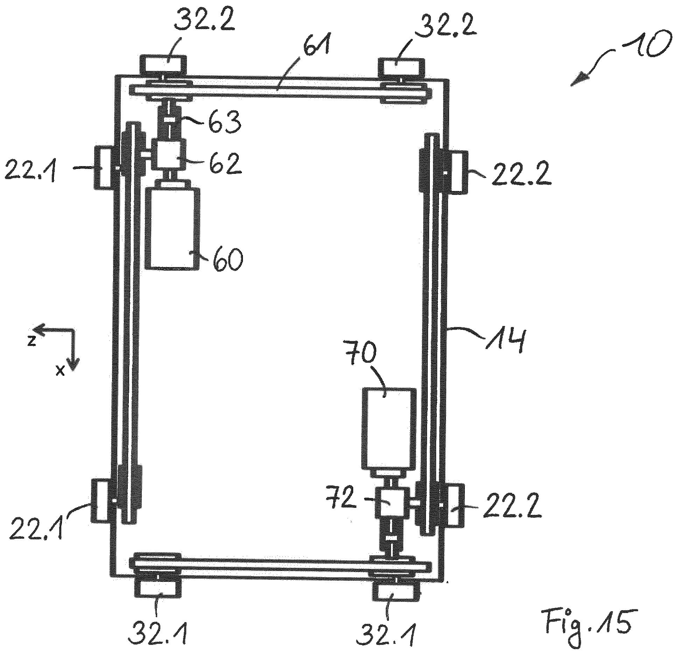

Die Ausführungsvariation gemäß Fig. 15 unterscheidet sich von der gemäß Fig. 14 dadurch, dass das Getriebe 62 des ersten Fahrantriebsaggregats 60 direkt an einer linken x-Radeinheit 22 ohne Zwischenschaltung eines Omega-Antriebs angeschlossen ist, so dass insgesamt kein Omega-Antrieb benötigt wird. Diese besonders bevorzugte Ausführungsform ist auch in Fig. 12 ausführlicher dargestellt, wobei zusätzlich das Hubaggregat 50, die x-, y- und z-Hubeinrichtungen 52, 54, 56 und der Antriebsmechanismus (gemäß der Schemazeichnung in Fig. 1) konstruktiv ausgestaltet dargestellt sind. Die konstruktive Umsetzung der Palettentransportvorrichtung 10 mit einem einzigen Hubantriebsaggregat 50 und einem ersten Fahrantriebsaggregat 60 und einem zweiten Fahrantriebsaggregat 70, das prinzipiell einen Aufbau gemäß Fig. 1 aufweist, wobei die Hubeinrichtungen 52, 54, 56 als Kurvenscheiben ausgebildet sind, ergibt sich genauer aus Fig. 12.

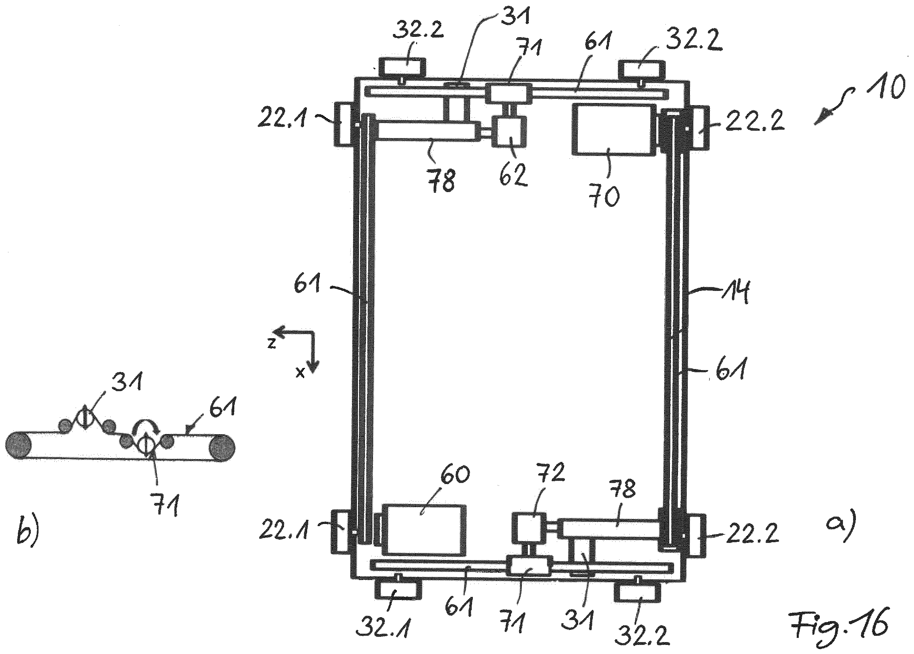

Fig. 16 zeigt ein weiteres konstruktives Ausführungsbeispiel bei der das erste Fahrantriebsaggregat 60 direkt auf die linke untere x-Radeinheit 22.1 einwirkt. Diese untere x-Radeinheit 22.1 überträgt die Drehbewegung über den Zahnriemen 61 auf die obere x-Radeinheit 22.1. An dieser oberen x-Radeinheit 22.1 ist eine Drehwelle 78 angeschlossen, die über ein Getriebe 62 mit einer Omega-Antriebseinheit 71 für die beiden rechten z-Radeinheiten 32.2 verbunden ist. Des Weiteren ist in den Zahnriemenverlauf des oberen Zahnriemens 61 zum Spannungsausgleich eine Vorspannwelle 41 vorhanden. Die Antriebssituation bezüglich des oberen Zahnriemens 61 ist in Fig. 16b schematisch dargestellt.

Das erste Fahrantriebsaggregat 60 verfährt somit in Höhenrichtung mit der x-Radeinheit 22.1.

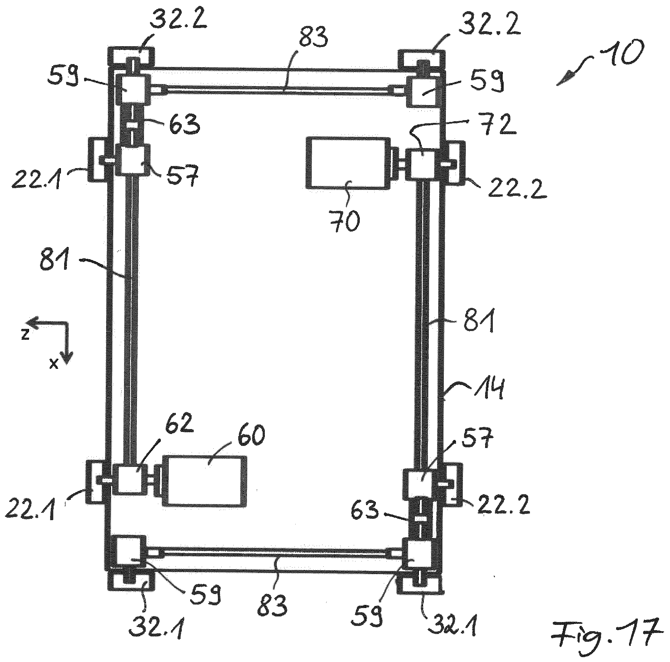

In dem Ausführungsbeispiel gemäß Fig. 17 ist das erste Fahrantriebsaggregat 60 über das Getriebe 62 direkt mit der linken unteren x-Radeinheit 22.1 verbunden, so dass es höhenmäßig an die Hubbewegung der linken x-Radeinheiten 22 gekoppelt ist. Auf die obere linke x-Radeinheit 22.1 ist direkt ein weiteres Getriebe 57 geschaltet, das mit dem Getriebe 62 über eine Welleneinheit 81 gekoppelt ist. Die oberen rechten und linken z-Radeinheiten 32 weisen ebenfalls ein vorgeschaltetes Getriebe 59 auf, die über eine zweite Welleneinheit 83 miteinander antriebsmäßig gekoppelt sind. Die Verbindung zwischen dem Getriebe 57 und dem weiteren Getriebe 59 erfolgt über eine Gelenkwelle 63. Entsprechend ist die antriebsmäßige Kopplung des zweiten Fahrantriebsaggregats 70 an die rechten x-Radeinheiten 22.2 und linken z-Radeinheiten 32.1 gestaltet.

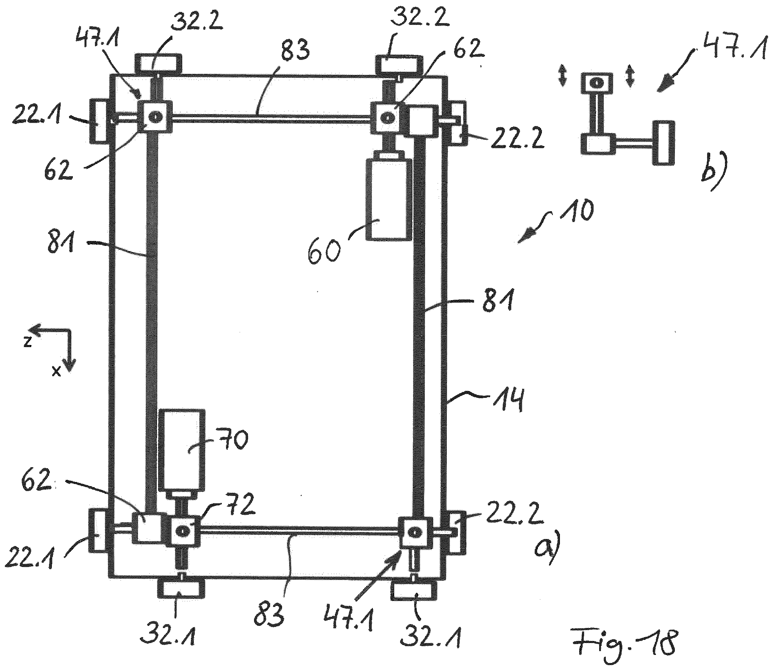

Das Ausführungsbeispiel gemäß Fig. 18 zeigt als Antriebskopplungsvorrichtung einen Wellenantrieb mit Schubgelenk 47. Die beiden rechten z-Radeinheiten 32.2 sind über die zweite Welleneinheit 83 miteinander gekoppelt. Das erste Fahrantriebsaggregat 60, das über die zweite Welleneinheit 83 an ein Getriebe 62 angeschlossen ist, ist direkt an die rechte z-Radeinheit 32.2 angeschlossen. Die linken x-Radeinheiten 22.1, die über die erste Welleneinheit 81 und zugehörige Getriebeeinheiten 62 miteinander gekoppelt sind, sind im oberen linken Eckbereich zum Höhenausgleich über ein Schubgelenk 47.1 miteinander gekoppelt, wobei das Schubgelenk 47.1 schematisch in Fig. 18b dargestellt ist.

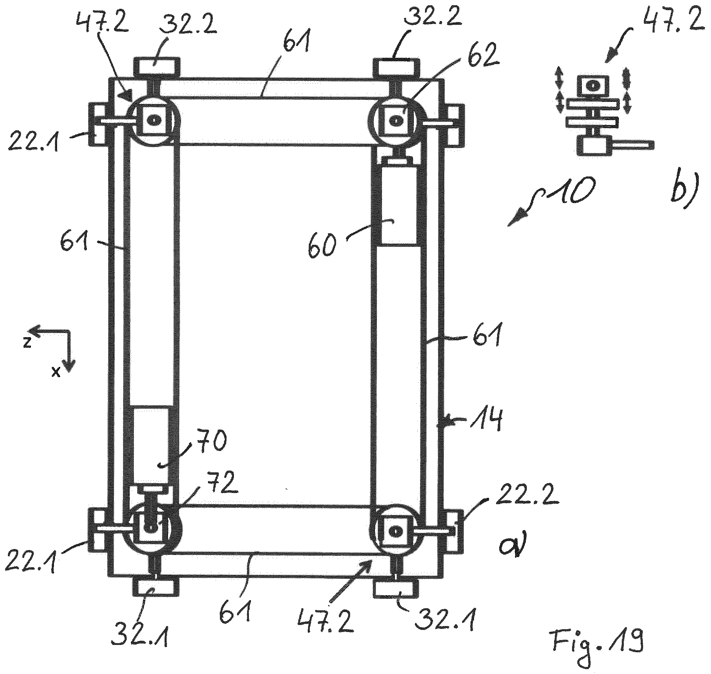

Die Ausführungsform gemäß Fig. 19 unterscheidet sich von der Ausführungsform dadurch, dass die Welleneinheiten durch Zahnriemen 61 ersetzt sind und das Schubgelenk 47.1 durch ein waagerechtes Schubgelenk 47.2 zum Höhenausgleich ersetzt ist, das in Fig. 19 b stark schematisiert dargestellt ist.

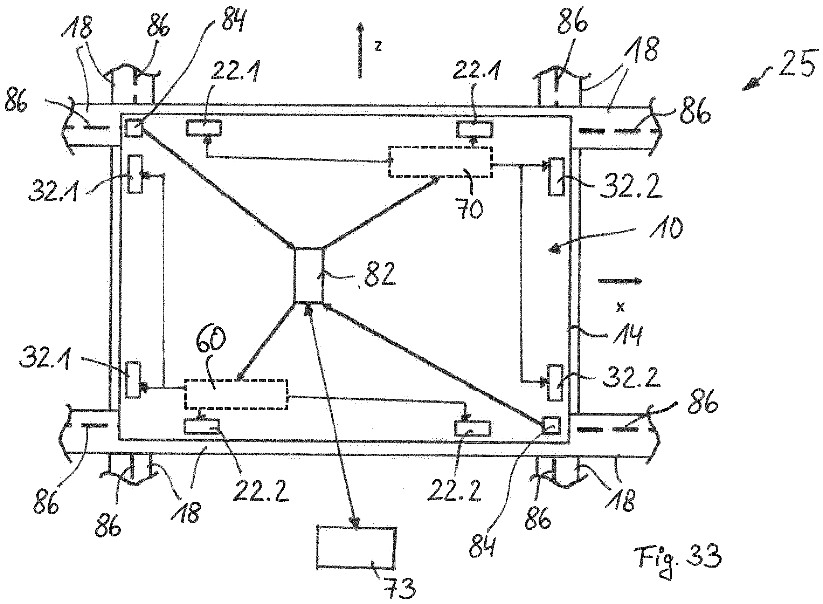

In Fig. 33 ist ausschnittsweise in einer Draufsicht ein Detail eines Regalsystems 25 mit orthogonalen Fahrwegen 18 (x-, z-Richtung) und einer Palettentransportvorrichtung 10 dargestellt, das eine Fahrantriebsaggregatsteuereinrichtung 82 aufweist, die ein erstes Fahrantriebsaggregat 60 für den Antrieb der rechten x-Radeinheiten 22.2 und linken z-Radeinheiten 32.1 und ein zweites Fahrantriebsaggregat 70 für die linken x-Radeinheiten 22.1 und rechten z-Radeinheiten 32.2 aufweist. Der Fahrweg 18 wird dabei durch in x- und z-Richtung verlaufende Fahrprofile gebildet. Im linken oberen und rechten unteren Eckbereich des Chassis 14 der Palettentransportvorrichtung 10 ist diametral gegenüberliegend eine Sensoreinheit 84 angeordnet, die jeweils eine auf dem Fahrweg 18 angebrachte Fahrwegmarkierung 86 detektiert und ihre Signale an die Fahrantriebsaggregatsteuereinrichtung 82 abgibt. In Abhängigkeit der empfangenen Signale von den Sensoreinheiten 84, das heißt die Differenz von Soll zu IST-Fahrweg, steuert die Fahrantriebsaggregatsteuereinrichtung 82 den Antrieb des ersten beziehungsweise zweiten Fahrantriebsaggregat 60, 70 um jederzeit eine exakte Geradeausfahrt zu gewährleisten. Je nach Abweichung nach geradlinigen Verlauf der Fahrwegmarkierung 86 veranlasst die Fahrantriebsaggregatsteuereinrichtung 82 einen unterschiedlichen Antrieb der rechten und linken x-Radeinheiten 22.1, 22.2 beziehungsweise der rechten und linken z-Radeinheiten 32.1, 32.2 ("Panzerantrieb"), so dass permanent eine exakte Geradeausfahrt entweder in x- oder z-Richtung der Palettentransportvorrichtung 10 gewährleistet ist.

Die beiden Sensoreinheiten 84 können auch auf einer Fahrzeugseite vorne beziehungsweise hinten angeordnet sein. Dabei tasten zwei parallel angeordnete Sensoreinheiten die Fahrwegmarkierung 86 ab und messen die jeweiligen Abweichungen vom Sollwert. Aus der Abweichungsdifferenz wird ein Winkelmaß gebildet, der die Grundlage zur entsprechenden Ansteuerung der Fahrantriebsaggregate 60 beziehungsweise 70 zur Korrektur der Fahrrichtung bildet.

Die Fahrantriebsaggregatsteuereinrichtung 82 steht dabei in Kommunikationsverbindung mit einer übergeordneten Regalsystemsteuerungseinrichtung 73, die die Bewegung der Palettentransportvorrichtung 10 zur jeweiligen Zielposition in x- oder z-Richtung innerhalb des Regalsystems 25 vorgibt.

In Fig. 35 ist in Ergänzung zu der Darstellung in Fig. 33 eine weitere Sensoreinrichtung 67, gegebenenfalls mit mehreren nicht dargestellten Sensoreinheiten, vorhanden, die die aktuellen Positionsdaten der Palettentransportvorrichtung 10 bezüglich der Regalstruktur, beispielsweise momentaner Position oder einer Abweichung vom Geradeausverlauf (x- oder z-Richtung), ermittelt und die Steuereinrichtung 82 entsprechend mit Signalen beaufschlagt zur Ansteuerung des ersten beziehungsweise zweiten Fahrantriebsaggregats 60, 70 für die Radeinheiten 22 beziehungsweise 32.

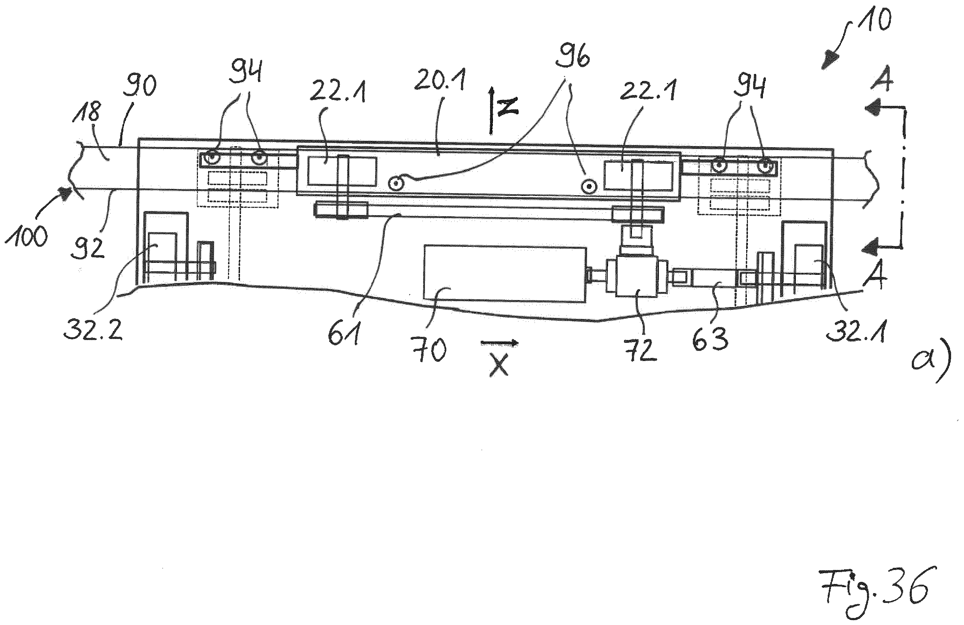

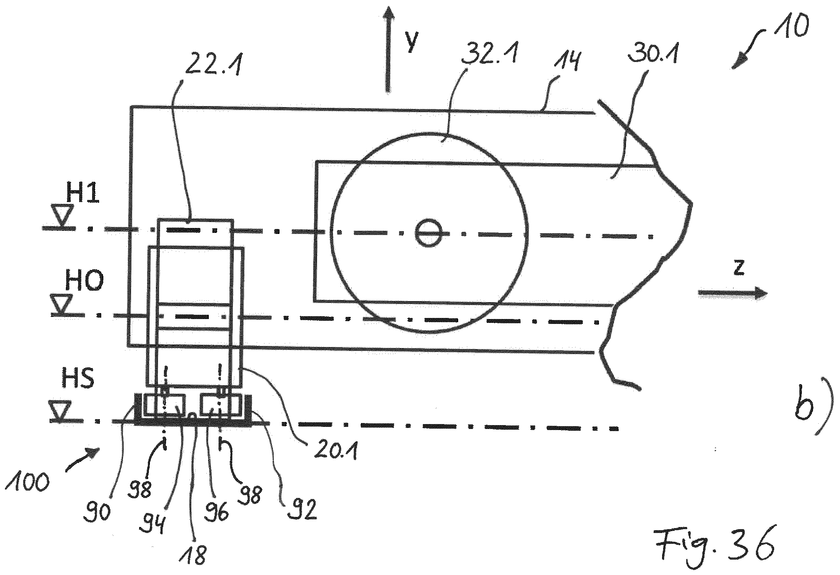

In Fig. 36a ist in Untersicht auf eine Palettentransportvorrichtung 10 gemäß Fig. 12 der obere x-Seitenbereich dargestellt, und Fig. 36b zeigt einen Schnitt durch diesen Bereich entlang Schnittführung A-A von Fig. 36a. Ergänzend ist eine mechanische Führungsrolleneinrichtung dargestellt, die einen Geradeauslauf ohne Einsatz von zusätzlichen Sensoreinheiten gewährleistet. Die Führungsrolleneinrichtung ist dabei auf einer x-Seite und/oder auf einer z-Seite vorhanden.

Die Führungsrolleneinrichtung weist eine zweite Führungsrolleneinheit 96 auf, die aus zwei in x-Richtung beabstandeten Führungsrollen besteht und die an dem x-Fahrwerk 20.1 drehbar angeschlossen sind, das heißt auch die Höhenbewegung des X-Fahrwerks 20.1 bei einem Richtungswechsel mitmachen. In x-Richtung beabstandet zu der zweiten Führungsrolleneinheit 96 sind links und rechts beabstandet jeweils erste Führungsrolleneinheiten 94 angeordnet, die jeweils aus einem Führungsrollenpaar bestehen, wobei die Führungsrollen in x-Richtung beabstandet sind. Auch die beiden zweiten Führungsrolleneinheiten 96 sind an das x-Fahrwerk 20.1 gekoppelt und führen somit auch eine Hubbewegung bei Fahrrichtungswechsel aus. Wie aus Fig. 36b ersichtlich ist die erste Führungsrolleneinheit 94 beziehungsweise zweite Führungsrolleneinheit 96 jeweils in z-Richtung versetzt angeordnet.

In Fig. 36b ist ein den Fahrweg 18 bildendes Fahrwegprofil 100 dargestellt, das außenseitig einen nach oben weisenden ersten Flansch 90 und innenseitig einen nach oben weisenden zweiten Flansch 92 aufweist.

Die ersten Führungsrolleneinheiten 94 sind dabei so angeordnet, dass die Innenseite des ersten Flansches 90 einen seitlichen Anschlag für die Führungsrolleneinheiten 94 bildet. Die zweite Führungsrolleneinheit 96 ist in z-Richtung nach innen versetzt angeordnet, derart, dass die Innenseite des zweiten Flansches 92 einen seitlichen Anschlag für die Führungsrolleneinheit 96 bildet, so dass die gesamte Führungsrolleneinrichtung innerhalb der beiden Flansche 90, 92 in x-Richtung exakt geführt wird. Dadurch, dass die ersten Führungsrolleneinheiten 94 und die zweite Führungsrolleneinheit 96 an das x-Fahrwerk 20.1 angeschlossen sind, kommen sie außer Eingriff mit dem Fahrwegprofil 100, sobald das x-Fahrwerk 20.1 bei einem Fahrwegsrichtungswechsel angehoben wird. Eine entsprechende Führungsrolleneinrichtung kann auch auf einer Seite in z-Richtung vorhanden sein.

Sämtliche Führungsrollen der Führungsrolleneinheiten 94, 96 sind um eine vertikale, in y-Richtung verlaufende Drehachse 98 drehbar gelagert.

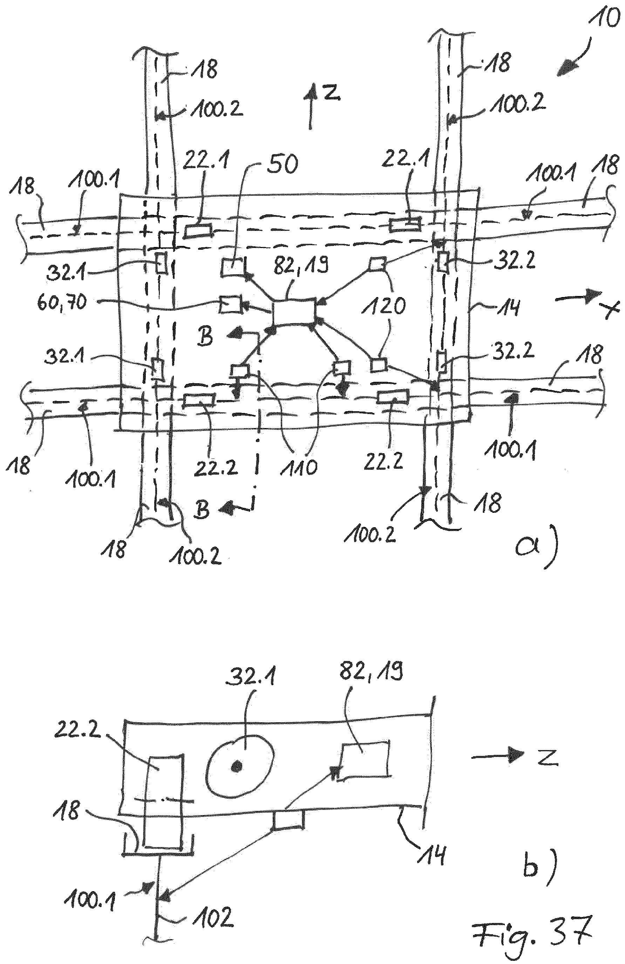

In den Figuren 37a und b ist eine weitere Ausführungsform einer erfindungsgemäßen Palettentransportvorrichtung dargestellt, die eine optimale, dauerhaft zuverlässige funktionierende Sensorsteuerung für den Geradeauslauf und den Fahrrichtungswechsel gewährleistet.

Die Palettentransportvorrichtung 10 weist hierzu zwei x-Sensoreinheiten 110, die auf einer x-Seite in x-Richtung beabstandet vorhanden sind. Weiterhin sind auf einer z-Seite in z-Richtung beabstandete z-Sensoreinheiten 120 vorhanden. Beide Sensoreinheiten 110, 120 sind unterhalb des Fahrzeuges der Palettentransportvorrichtung 10 an dieser angeschlossen und kommunizieren mit einer Steuereinrichtung 82, 19, die das Hubaggregat 50 und die ersten und zweiten Fahrantriebsaggregate 60, 70 ansteuert.

Sowohl die Fahrwege 18 in x-Richtung als auch in z-Richtung werden durch Fahrwegprofile 100.1 beziehungsweise 100.2 gebildet, die einen nach unten in y-Richtung überstehenden Profilbereich 102 aufweisen.

Sowohl die x-Sensoreinheiten 110 als auch die z-Sensoreinheiten 120 tasten die Innenseite des Profilbereiches 102 des jeweiligen Fahrwegprofils 100.1 beziehungsweise 100.2 ab und geben ihre ermittelten Werte an die Steuereinrichtung 82, 19 ab.

Bei einem Geradeauslauf in x- oder z-Richtung berechnet die Steuereinrichtung 82, 19 aus den Signalen der jeweiligen x-Sensoreinheiten 110 beziehungsweise z-Sensoreinheiten 120 eine gegebenenfalls vom Geradeauslauf abweichende Winkelstellung und steuert aufgrund dieser Berechnung das erste und zweite Antriebsaggregat 60, 70 zur Korrektur der Winkelabweichung an, um einen exakten Geradeauslauf zu gewährleisten.

Die x-Sensoreinheiten 110 und die z-Sensoreinheiten 120 werden auch eingesetzt, um die exakte Position der Palettentransportvorrichtung 10 bei einem Fahrrichtungswechsel zu ermitteln. Soll eine Fahrrichtungswechsel von x- in z-Richtung durchgeführt werden, werden von der Steuereinrichtung 82, 19 die Signale der z-Sensoreinheiten 120 dahingehend ausgewertet, ob der Istabstand zu dem unteren Profilbereich 102 des z-Fahrwegprofils 100.2 dem vorgegebenen Sollwert für die exakte Positionierung entspricht. Sobald eine Übereinstimmung festgestellt wird, veranlasst die Steuereinrichtung 82, 19 die Aktivierung des Hubantriebsaggregats 50, wodurch durch Absenkung der z-Radeinheiten 32 und anschließender Anhebung der x-Radeinheiten 22 ein Fahrrichtungswechsel vollzogen wird. Die Sensoreinheiten 110, 120 sind bevorzugt als Lasersensoreinheiten ausgebildet. Es können jedoch Sensoreinheiten mit anderen Wirkprinzipien eingesetzt werden, die eine zuverlässige Abstandsmessung gewährleisten.

## Patentansprüche

1. Palettentransportvorrichtung (10) zum Transport von Paletten (12) innerhalb einer orthogonal mit einer Längsrichtung (x), einer Querrichtung (z) und einer Höhenrichtung (y) ausgerichteten Regaleinrichtung entlang eines Fahrwegs (18) mit Längstransportwegen in x-Richtung und Quertransportwegen in z-Richtung, mit
- einem Chassis (14) mit einer Palettenaufnahmeeinheit (16),
- einem x-Fahrwerk (20) für das Verfahren in Längsrichtung (x) mit seitlich links und rechts beabstandet in x-Richtung angeordneten antreibbaren linken x-Radeinheiten (22.1) und rechten x-Radeinheiten (22.2),
- einem z-Fahrwerk (30) für das Verfahren in Querrichtung (z) mit seitlich links und rechts angeordneten antreibbaren beabstandeten linken z-Radeinheiten (32.1) und rechten z-Radeinheiten (32.2),
- Fahrantriebsaggregaten (40) für die Radeinheiten (22, 32),
- wobei die x- oder z-Radeinheiten (22, 32) je nach x- oder z-Fahrrichtung mit dem Fahrweg (18) in Kontakt bringbar sind,
- **dadurch gekennzeichnet, dass**
- gegebenenfalls eine y-Hubeinrichtung (56) für die Bewegung der Palettenaufnahmeeinheit (16) vorhanden ist,
- eine Steuereinrichtung (82) zur Steuerung des Antriebs des ersten und zweiten Fahrantriebsaggregats (60, 70) und/oder der Hubantriebsaggregate (50) vorhanden ist und
- Sensoreinheiten vorhanden sind, die die jeweilige Position der Palettentransportvorrichtung innerhalb des Regalsystems (25) erfassen und mit der Steuereinrichtung (82) entsprechend kommunizieren,
- weitere Sensoreinheiten vorhanden sind, die mit der Steuereinrichtung (82) kommunizieren, und die zur Kollisionserkennung in x- und z-Richtung dienen.

2. Palettentransportvorrichtung nach einem oder mehreren der vorstehenden Ansprüche,
- **dadurch gekennzeichnet, dass**
- die x-Hubeinrichtung (52)/z-Hubeinrichtung (54) über eine, insbesondere auf jeder Seite drehbar vorhandene antreibbare, Spindeleinrichtung bewegbar ist, die auf das x-Fahrwerk (20)/z-Fahrwerk (30) beziehungsweise die x-Radeinheiten (22)/z-Radeinheiten (32) direkt oder indirekt einwirkt und die Spindeleinrichtung über ein gemeinsames Hubantriebsaggregat (50) oder über ein x-Hubantriebsaggregat (50.1) für das x-Fahrwerk (20)/die x-Radeinheiten (22) und über ein z-Hubantriebsaggregat (50.2) für das z-Fahrwerk (30)/die z-Radeinheiten (32) ansteuerbar antreibbar ist.

3. Palettentransportvorrichtung nach Anspruch 2,
- **dadurch gekennzeichnet, dass**
- zwischen der Spindeleinrichtung, die aus einzelnen Spindeln bestehen kann und dem/den Hubantriebsaggregat/en, Kopplungseinrichtungen vorhanden sind, die die Drehbewegung des Antriebsaggregats auf die Spindeleinrichtung beziehungsweise deren einzelne Spindeln übertragen.

4. Palettentransportvorrichtung nach Anspruch 3,
- **dadurch gekennzeichnet, dass**
- die Spindeleinrichtung Einzelspindeln oder Doppelspindeln aufweist und der Kopplungsmechanismus als einfacher Hebelmechanismus, als Doppelhebelmechanismus, als Scherenmechanismus, als Doppelscherenmechanismus oder als Kniehebelmechanismus ausgebildet ist.

5. Palettentransportvorrichtung nach einem oder mehreren der vorstehenden Ansprüche oder nach Oberbegriff von Anspruch 1,
- **dadurch gekennzeichnet, dass**
- ein erstes Fahrantriebsaggregat (60) und ein zweites Fahrantriebsaggregat (70) vorhanden ist,
- wobei jedes Fahrantriebsaggregat (60, 70) jeweils mit linken x-Radeinheiten (22) beziehungsweise linken z-Radeinheiten (32) und rechten x-Radeinheiten (22) beziehungsweise rechten z-Radeinheiten (32) einer Seite jeweils antriebsmäßig direkt oder indirekt gekoppelt ist.

6. Palettentransportvorrichtung nach Anspruch 5,
- **dadurch gekennzeichnet, dass**
- die Kopplungseinrichtung zwischen erstem und/oder zweitem Fahrantriebsaggregat (60, 70) zu den Radeinheiten (22, 32) zumindest ein Winkelgetriebe (62, 72), eine Gelenkwelle (63) und/oder zumindest einen Zahnriemen (61) und/oder zumindest eine Kette (49) und/oder zumindest eine Welleneinheit (81, 83) und/oder zumindest einen Omega-Antrieb (71) und/oder zumindest eine Schubgelenkwelleneinheit (47) aufweist.

7. Palettentransportvorrichtung nach Anspruch 6,
- **dadurch gekennzeichnet, dass**
- die Kopplungseinrichtung den Antrieb der x-Radeinheiten (22) beziehungsweise z-Radeinheiten (32) in unterschiedlichem Höhenniveau in y-Richtung ermöglicht.

8. Palettentransportvorrichtung nach einem oder mehreren der Ansprüche 5 bis 7,
- **dadurch gekennzeichnet, dass**
- das erste und zweite Fahrantriebsaggregat (60, 70) jeweils die/das zugeordnete/n x-Radeinheiten (22) oder x-Fahrwerk (20) direkt und die/das zugeordnete/n z-Radeinheiten (32) oder z-Fahrwerk (30) indirekt über die Kopplungseinrichtung jeweils antreibt oder umgekehrt.

9. Palettentransportvorrichtung nach einem oder mehreren der Ansprüche 5 bis 8,
- **dadurch gekennzeichnet, dass**
- das erste und zweite Fahrantriebsaggregat (60, 70) jeweils an das höhenverschiebbare x- oder z-Fahrwerk (20, 30) angeschlossen ist, das heißt in y-Richtung mit dem Fahrwerk (20, 30) bewegungsmäßig gekoppelt ist.

10. Palettentransportvorrichtung nach einem oder mehreren der Ansprüche 5 bis 8,
- **dadurch gekennzeichnet, dass**
- das erste und zweite Fahrantriebsaggregat (60, 70) ortsfest innerhalb der Vorrichtung (10) vorhanden ist.

11. Palettentransportvorrichtung nach Anspruch 1,
- **dadurch gekennzeichnet, dass**
- zumindest eine erste Sensoreinheit (84) vorhanden ist, die auf dem Fahrweg (18) vorhandene Fahrwegsmarkierungen (86)/Positionsmarkierungen detektiert und entsprechende Signale an die Steuereinrichtung (82) zur Spursteuerung und/oder zum Richtungswechsel und/oder zum Hub der Palettenaufnahmeeinheit (16) abgibt.

12. Palettentransportvorrichtung nach Anspruch 11,
- **dadurch gekennzeichnet, dass**
- zwei erste Sensoreinheiten (84) vorhanden sind, die diagonal gegenüberliegend im Eckbereich der Vorrichtung (10) angeordnet sind.

13. Palettentransportvorrichtung nach Anspruch 1,
- **dadurch gekennzeichnet, dass**
- zwei in z-Richtung beabstandete z-Sensoreinheiten (120) unterseitig an der Palettentransportvorrichtung vorhanden sind,
- zwei in x-Richtung beabstandete x-Sensoreinheiten (110) unterseitig an der Palettentransportvorrichtung vorhanden sind,
- eine Steuereinrichtung (82, 19) für das Hubaggregat (50) und für das erste und zweite Fahrantriebsaggregat (60, 70) vorhanden ist,
- wobei die z- und x-Sensoreinheiten (120, 110) den Abstand zu der Innenseite von den Fahrweg (18) bildenden unterseitigen z- beziehungsweise x-Fahrzeugprofilen (102, 101) messen und entsprechende Signale an die Steuereinrichtung (82, 19) abgeben,
- wobei bei einer Fahrt in x- beziehungsweise z-Richtung die Steuereinrichtung (82, 19) aufgrund der Signale der x-Sensoreinheiten (110) beziehungsweise der z-Sensoreinheiten (120) eine eventuelle Winkelabweichung vom Geradeauslauf berechnet und das erste/zweite Fahrantriebsaggregat (60, 70) zur Korrektur der Winkelabweichung entsprechend ansteuert,
- wobei bei einem Fahrrichtungswechsel von x- in z-Richtung oder von z- in x-Richtung die Steuereinrichtung (82, 19) aufgrund der Signale der x- beziehungsweise z-Sensoreinheiten (110, 120) bei Erreichen eines vorgegebenen Abstandes zu dem x- beziehungsweise y-Fahrprofil (101, 102), das heißt bei Erreichen der Wechselposition, das Hubantriebsaggregat (50) beziehungsweise die Hubantriebsaggregate (50.1, 50.2) zum Durchführen des Fahrrichtungswechsels entsprechend ansteuert.

14. Palettentransportvorrichtung nach Anspruch 11 oder 13,
- **dadurch gekennzeichnet, dass**
- weitere Sensoreinheiten vorhanden sind, die mit der Steuereinrichtung (82) kommunizieren, und die zur Erkennung der Lagerplatzbelegung und/oder zur Erkennung des Höhenniveaus der Palettenaufnahmeeinheit und/oder zur Detektierung des Belegungszustands der Palettenaufnahmeeinheit dienen.

15. Regalsystem,
- **dadurch gekennzeichnet, dass**
- das Regalsystem zumindest eine Palettentransportvorrichtung (10) nach einem oder mehreren der vorstehenden Ansprüche enthält.
